# EUROPÄISCHE PATENTSCHRIFT

(11) **EP 4 194 375 B1**
(45) Veröffentlichungstag und Bekanntmachung des Hinweises auf die Patenterteilung: **15.04.2026**
(21) Anmeldenummer: 22211855.6
(22) Anmeldetag: 07.12.2022
(51) Int. Cl.: B65G 43/00, B65G 54/02, G05B 19/4061, H02K 11/30, H02K 41/03, H02P 25/064

(54) **VERFAHREN ZUM BETREIBEN EINES PLANARMOTORS**
METHOD FOR OPERATING A PLANAR MOTOR
PROCÉDÉ DE FONCTIONNEMENT D'UN MOTEUR PLANAIRE

(30) Priorität: 09.12.2021 AT 509842021
(43) Veröffentlichungstag der Anmeldung: 14.06.2023
(60) Teilanmeldung: 24150702.9
(73) Patentinhaber: ABB Schweiz AG, 5400 Baden (CH)
(72) Erfinder: Hauer, Michael, 5142 Eggelsberg (AT); Flixeder, Stefan, 5142 Eggelsberg (AT)
(74) Vertreter: Patentanwälte Pinter & Weiss OG

(56) Entgegenhaltungen:
- EP-A1- 0 433 522
- EP-A1- 3 095 739
- WO-A1-2020/109276
- US-B2- 10 926 418

## Beschreibung

Die gegenständliche Erfindung betrifft ein Verfahren zum Betreiben eines Planarmotors mit einer Bewegungsebene, in der eine Mehrzahl von Bewegungspfaden vorgegeben wird, entlang denen sich eine Mehrzahl von Transporteinheiten bewegen, wobei zumindest zwei Bewegungspfade in der Bewegungsebene zumindest abschnittsweise zweidimensional um den jeweiligen Bewegungspfad zu einer Bewegungsstraße in der Bewegungsebene ausgedehnt werden, indem zumindest abschnittsweise an jeder Stelle des jeweiligen Bewegungspfades eine Breite der Bewegungsstraße vorgegeben wird, und geprüft wird, ob sich die zumindest zwei ergebenden Bewegungsstraßen überlappen oder ob sich eine der sich ergebenden Bewegungsstraßen mit sich selbst überlappt oder ob sich eine der sich ergebenden Bewegungsstraßen mit einem hinsichtlich der Lage und Geometrie definierten Hindernis in der Bewegungsebene überlappt, um eine Konfliktzone in einem Überlappungsbereich zu ermitteln, in der Gefahr einer Kollision zwischen Transporteinheiten, die im Bereich der Konfliktzone auf an der Konfliktzone beteiligten Bewegungsstraßen bewegt werden, besteht oder Gefahr einer Kollision zwischen einer Transporteinheit, die auf einer an der Konfliktzone beteiligten Bewegungsstraße bewegt wird, und dem Hindernis in der Bewegungsebene besteht, und die ermittelte Konfliktzone bei der Steuerung der Bewegung der Transporteinheiten entlang des zugeordneten Bewegungspfades berücksichtigt wird, um Kollisionen zwischen Transporteinheiten, die auf an der Konfliktzone beteiligten Bewegungsstraßen bewegt werden, oder zwischen einer Transporteinheit und dem Hindernis in der Bewegungsebene zu vermeiden.

Bei einem Planarmotor ist ein Primärteil (Stator) vorgesehen und zumindest ein Sekundärteil (Läufer), der relativ zum Primärteil bewegbar angeordnet ist. Am Primärteil sind Antriebsspulen angeordnet und am Sekundärteil Antriebsmagnete, oder umgekehrt. Die Antriebsmagnete sind entweder als Permanentmagnete, elektrische Spulen oder Kurzschlusswicklungen ausgeführt. Die Antriebsspulen sind elektrische Spulen, die zur Erzeugung eines elektromagnetischen Feldes bestromt werden. Durch das Zusammenwirken der (elektro)magnetischen Felder der Antriebsmagnete und der Antriebsspulen wirken Kräfte auf den Sekundärteil, die es ermöglichen, den Sekundärteil relativ zum Primärteil zu bewegen. Die Antriebsspulen sind am Primärteil in einer Bewegungsebene angeordnet. Es sind auch Ausführungen bekannt, bei denen die Antriebsspulen in mehreren Ebenen am Primärteil angeordnet sind. Der Sekundärteil kann in der Bewegungsebene in den zwei Bewegungsrichtungen frei bewegt werden. Es ist auch möglich, den Sekundärteil in gewissen Grenzen normal auf die Bewegungsebene zu bewegen. Ebenso können Drehbewegungen des Sekundärteils, insbesondere um eine Drehachse normal auf die Bewegungsebene, erzeugt werden. Üblicherweise wird der Sekundärteil durch Kräfte über der Bewegungsebene in Schwebe gehalten.

Planarmotoren werden beispielsweise in elektromagnetischen Transportsystemen eingesetzt, bei denen eine Transporteinheit zur Durchführung einer Transportaufgabe bewegt wird. Die Transporteinheit ist als Sekundärteil ausgeführt.

Durch die Bestromung von Antriebsspulen im Bereich der Antriebsmagnete der Transporteinheit, beispielsweise durch das Anlegen von elektrischen Spannungen an die aktiven Antriebsspulen, kann ein elektromagnetisches Feld erzeugt werden, das mit dem magnetischen Feld der Antriebsmagnete zusammenwirkt, um eine auf die Transporteinheit wirkende Vortriebskraft (in Bewegungsrichtung in einer Bewegungsebene entlang des Stators) und/oder Normalkraft (in Richtung normal zur Bewegungsebene) zu erzeugen. Durch Ansteuerung der einzelnen beteiligten Antriebsspulen, zur Regelung des erzeugten magnetischen Flusses, können die entstehenden Kräfte beeinflusst werden. Dadurch kann die Transporteinheit in gewünschter Weise in der Bewegungsebene bewegt werden, indem durch Ansteuerung der Antriebsspulen ein in der gewünschten Richtung bewegtes magnetisches Feld erzeugt wird. Dabei ist es auch möglich, an der Bewegungsebene eine Vielzahl von Transporteinheiten anzuordnen, deren Bewegungen einzeln und unabhängig voneinander kontrolliert werden können, indem die jeweils mit einer Transporteinheit zusammenwirkenden Antriebsspulen in benötigter Weise bestromt werden, in der Regel durch Anlegen einer elektrischen Spannung.

Solche Planarmotoren, deren Aufbau und deren Funktionsweise sind hinlänglich bekannt und sind beispielsweise in der WO 2013/059934 A1 oder WO 2015/017933 A1 beschrieben.

Nachdem eine Mehrzahl von Transporteinheiten frei in der Bewegungsebene bewegt werden können, ist es erforderlich, den Transportpfad einer Transporteinheit in der Bewegungsebene zu planen. In der Bewegungsebene kann es eine Mehrzahl von Transportpfaden geben, entlang denen sich die Transporteinheiten bewegen können. Transportpfade verschiedener Transporteinheiten können sich kreuzen, sodass die Gefahr einer Kollision zwischen auf den kreuzenden Transportpfaden bewegten Transporteinheiten bestehen kann. Transportpfade können sich auch so nahe kommen, ohne sich zu kreuzen, sodass ebenfalls die Gefahr einer Kollision zwischen auf den Transportpfaden bewegten Transporteinheiten besteht. Es ist daher vorteilhaft, die Transportpfade so zu planen, dass es zu keinen oder möglichst wenigen Kreuzungen oder Annäherungen kommt. Es sind aber auch Mechanismen erforderlich, die es ermöglichen einerseits eine Kollisionsgefahr zu erkennen und andererseits potentielle Kollisionen zu vermeiden. Solche Mechanismen bedürfen allerdings einerseits Rechenkapazitäten und andererseits kann dadurch der Durchsatz an Transporteinheiten entlang der Transportpfade, und damit auch eine Transportleistung einer Transportanlage mit einem Planarmotor, eingeschränkt werden, weil die Transporteinheiten gewisse Abstände einhalten müssen.

US 10, 926,418 B2 beschreibt einen Planarmotor mit eindimensionalen Pfaden für die Bewegung der Transporteinheiten. Für die Kollisionsvermeidung werden mögliche Kollisionen zweidimensional geprüft. EP 3 095 739 A1 beschreibt eine Pfadplanung auf einem Planarmotor. Mögliche Kollisionen an Kreuzungsstellen der Pfade werden durch das First Come First Serve Prinzip aufgelöst.

Die WO 2020/109276 A1 beschreibt einen Planarmotor mit einem vordefinierten Pfadnetz bestehend aus einer Anzahl von Pfaden, entlang denen sich die Transporteinheiten bewegen können. Ein Pfad ist dabei als eindimensionale Linie in der Bewegungsebene definiert. Es ist auch möglich, dass sich zwei Pfade kreuzen. Zur Vermeidung einer Kollision an einem Kreuzungspunkt sind Regeln oder Prioritäten definiert, die festlegen, wie sich zwei Transporteinheiten zur Vermeidung einer Kollision über einen Kreuzungspunkt bewegen dürfen, beispielsweise durch Vorrangregeln, Priorisierung von Transporteinheiten, first come-first-serve Ansätzen. Besteht keine Gefahr einer Kollision, besteht auch keine Anforderung hinsichtlich einer Kollisionsvermeidung. Nähert sich eine Transporteinheit beispielsweise einem Kreuzungspunkt, ohne dass eine andere Transporteinheit in der Nähe ist, kann diese Transporteinheit den Kreuzungspunkt ohne Abfrage der Regeln oder Prioritäten durchfahren. Die WO 2020/109287 A1 beschreibt ein Verfahren zur Pfadplanung auf einem Planarmotor mittels Grafen, bestehend aus Knoten und Kanten. Auf eine Vermeidung von Kreuzungen oder Annäherungen von Transportpfaden wird aber nicht eingegangen.

EP 433 522 A1 offenbart ein Verfahren zum Betreiben eines Planarmotors nach dem Oberbegriff des Anspruchs 1. Die genannte Druckschrift beschreibt die Verwendung von Bewegungsstraßen für die Bewegung der Transporteinheiten eines Planarmotors. Mögliche Überschneidungen der zweidimensionalen Bewegungsstraßen werden zweidimensional geprüft, um möglichen Kollisionen vorzubeugen. Es ist eine Aufgabe der gegenständlichen Erfindung, ein Verfahren zum Betreiben eines Planarmotors angegeben wird, mit dem die Gefahr von Kollisionen von Transporteinheit oder von einer Transporteinheit mit einem Hindernis in der Bewegungsebene verringert werden kann.

Diese Aufgabe wird durch ein Verfahren zum Betreiben eines Planarmotors nach Anspruch 1 gelöst.

Erfindungsgemäß wird zur Kollisionsvermeidung in einer Konfliktzone eine zweidimensionale Kollisionsüberwachung verwendet, die zweidimensional prüft, ob in der Konfliktzone in der Bewegungsebene für eine in einer an der Konfliktzone beteiligten Bewegungsstraße bewegte Transporteinheit die Gefahr einer Kollision mit einer in einer anderen an der Konfliktzone beteiligten Bewegungsstraße bewegten Transporteinheit oder mit einem Hindernis in der Bewegungsebene besteht und auf einem Bewegungspfad außerhalb einer Konfliktzone eine eindimensionale Kollisionsüberwachung verwendet wird, die in Bewegungsrichtung prüft, ob Gefahr einer Kollision zwischen zwei auf dem Bewegungspfad hintereinanderfahrenden Transporteinheiten besteht. Damit kann eine aufwendige zweidimensionale Kollisionsüberwachung auf die Konfliktzonen beschränkt werden, die vorher bereits eingeschränkt wurden. Die Kollisionsüberwachung lässt sich so wesentlich vereinfachen. Außerhalb einer Konfliktzone kann damit die Kollisionsüberwachung besonders einfach und mit wenig Rechenaufwand eindimensional realisiert werden.

Durch die Verwendung von Bewegungsstraßen können auf einfache Weise Überlappungsbereiche ermittelt werden, in denen grundsätzlich die Gefahr einer Kollision besteht. Die Kenntnis einer Konfliktzone kann nun bei der Steuerung der Bewegung der Transporteinheiten entlang der Bewegungspfade genutzt werden, um Kollisionen zu vermeiden. Das kann sowohl für eine Kollisionserkennung, als auch für eine Kollisionsvermeidung eingesetzt werden. Die Konfliktzonen ermöglichen aber auch eine Zugangskontrolle von Transporteinheiten zu einer Konfliktzone, auch vor dem Hintergrund der Kollisionsvermeidung.

Die Breite der Bewegungsstraße in der Bewegungsebene wird einfach orthogonal auf den jeweiligen Bewegungspfad vorgegeben, was eine einfache Realisierung des Konzepts der Bewegungsstraße ermöglicht. Die Breite der Bewegungsstraße in der Bewegungsebene kann dabei zumindest abschnittsweise asymmetrisch zum Bewegungspfad vorgegeben werden, womit auch auf bestimmte Bewegungszustände einer Transporteinheit auf dem Bewegungspfad Rücksicht genommen werden kann.

In einer vorteilhaften Ausgestaltung der Bestimmung der Breite wird an einer Transporteinheit ein Referenzpunkt bestimmt und der Bewegungspfad auf den Referenzpunkt bezogen. An einer Position des Bewegungspfades in Bewegungsrichtung der Transporteinheit gesehen an beiden Seiten der Transporteinheit werden Vektoren vom Referenzpunkt zu einer Außenkontur der Transporteinheit in der Bewegungsebene ermittelt und die ermittelten Vektoren jeweils auf eine Normale auf den Bewegungspfad an dieser Position projiziert und die jeweils längsten Projektionen auf jeder Seite zur Breite der Bewegungsstraße an dieser Stelle addiert. Das ermöglicht aus der Kenntnis der Lage der Transporteinheit insbesondere eine vollautomatisierte Ermittlung der Breite an jeder belieben Stelle des Bewegungspfades.

In einer besonders vorteilhaften Ausgestaltung, wird die ermittelte Konfliktzone bei der Steuerung der Bewegung der Transporteinheiten entlang des zugeordneten Bewegungspfades berücksichtigt, indem zur Kollisionsvermeidung zumindest eine der an der Konfliktzone beteiligten Bewegungsstraßen zumindest abschnittsweise umgeplant wird, um die Konfliktzone zu eliminieren und/oder um die Größe der ermittelten Konfliktzone zu verkleinern und/oder um eine Anzahl der ermittelten Konfliktzonen zu verringern und/oder um die Anzahl der an der Konfliktzone beteiligten Bewegungsstraßen zu verringern und/oder um einen Abstand zwischen zwei Konfliktzonen zu vergrößern. Die Bewegung von Transporteinheiten, die auf dem umgeplanten Transportpfad bewegt werden, erfolgt dann entlang des zumindest einen umgeplanten Transportpfades. Eine solche Umplanung kann nach der Ermittlung der Konfliktzone, aber noch vor dem normalen Betrieb des Planarmotors erfolgen, sodass dadurch im Betrieb die Kollisionsgefahr verringert werden kann.

Eine Bewegungsstraße kann einfach umgeplant werden, indem eine Geometrie des der Bewegungsstraße zugeordneten Bewegungspfades in der Bewegungsebene zumindest abschnittsweise umgeplant wird und/oder zumindest abschnittsweise eine Breite der Bewegungsstraße geändert wird.

In einer weiteren vorteilhaften Ausgestaltung wird vor dem Betreten einer Konfliktzone durch eine in einer an der Konfliktzone beteiligten Bewegungsstraße bewegten Transporteinheit überprüft, ob diese Transporteinheit mit der vorgesehenen Bewegung die Konfliktzone ohne Kollision mit einer anderen auf einer anderen an der Konfliktzone beteiligten Bewegungsstraße bewegte Transporteinheit wieder verlassen kann und im negativen Fall das Betreten verweigert wird. Die Konfliktzone kann somit von der Steuerung des Planarmotors auch für eine Betretungslogik verwendet werden, die den Zutritt von Transporteinheiten zur Konfliktzone kontrolliert.

Die gegenständliche Erfindung wird nachfolgend unter Bezugnahme auf die Figuren 1a bis 7 näher erläutert, die beispielhaft, schematisch und nicht einschränkend vorteilhafte Ausgestaltungen der Erfindung zeigen. Dabei zeigt
Fig.1a und Fig.1b verschiedene Ansichten einer möglichen Ausgestaltung eines Planarmotors,
Fig.2a bis 2e mögliche Anordnungen von Antriebsspulen am Stator eines Planarmotors,
Fig.3a bis 3f mögliche Anordnungen von Antriebsmagneten an einer Transporteinheit eines Planarmotors,
Fig.5 Bewegungspfade von Transporteinheiten in einer Bewegungsebene des Planarmotors,
Fig.6 Bewegungsstraßen um Bewegungspfaden von Transporteinheiten und Konfliktzonen in einer Bewegungsebene des Planarmotors und
Fig.7 eine vorteilhafte Ermittlung einer Breite einer Bewegungsstraße.

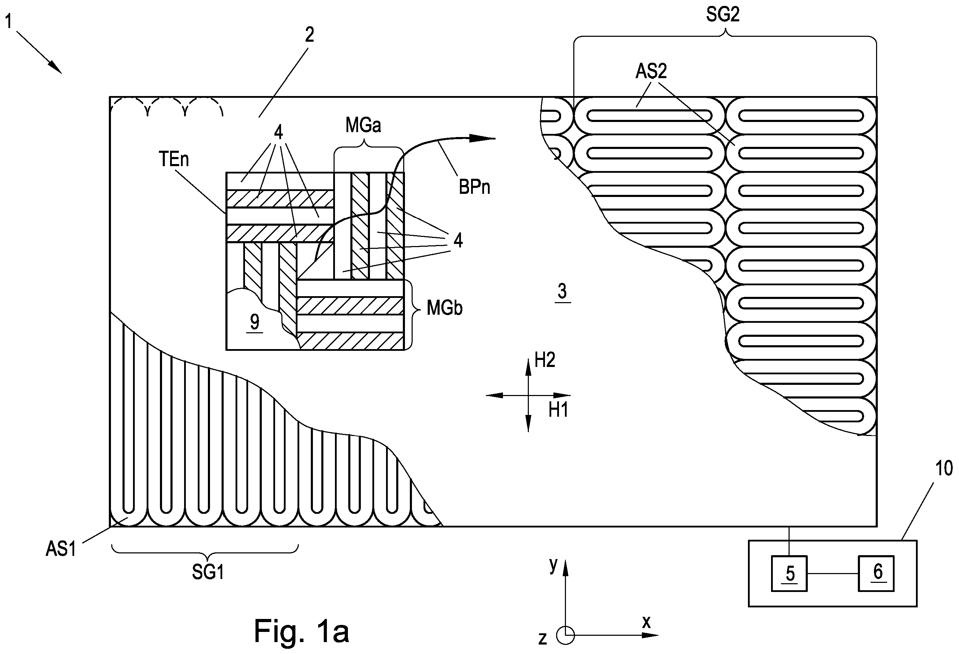

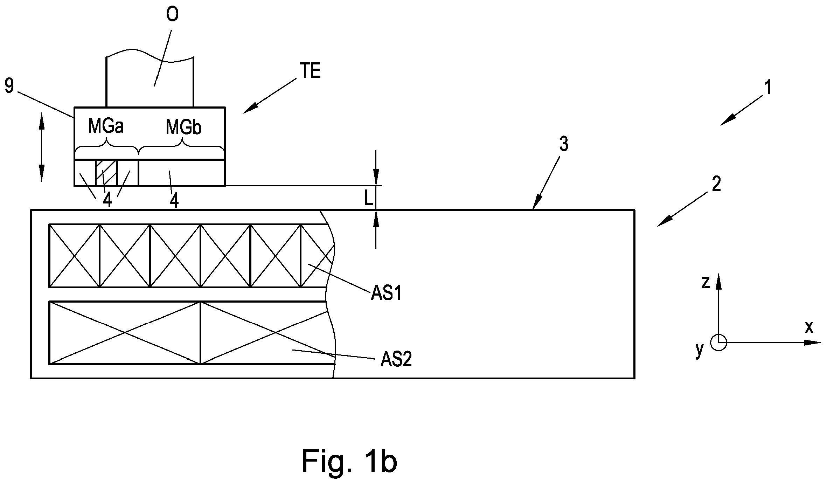

In Fig.1a und 1b ist eine beispielhafte Ausgestaltung einer Transporteinrichtung in Form eines Planarmotors 1 vereinfacht dargestellt. Dabei zeigt Fig.1a den Planarmotor 1 in einer teilweise aufgebrochenen Draufsicht und Fig.1b den Planarmotor 1 in einer teilweise aufgebrochenen Seitenansicht. Der Planarmotor 1 weist zumindest ein Transportsegment 2 als Stator auf, das eine Bewegungsebene 3 ausbildet und zumindest eine Transporteinheit TEn, die in der Bewegungsebene 3 zumindest zweidimensional in zwei Hauptbewegungsrichtungen H1, H2 bewegbar ist. "n" wird hierbei als Index verwendet, um verschiedene Transporteinheiten unterscheiden zu können, wobei allgemein das Bezugszeichen TEn verwendet wird, wenn keine bestimmte Transporteinheit angesprochen wird. Unter der Bewegungsebene 3 ist im Rahmen der Erfindung die ebene Oberfläche des Transportsegments 2 zu verstehen, welche durch die Größe und Form des Transportsegments 2 bestimmt wird. Die Bewegungsebene 3 kann im Raum beliebige ausgerichtet sein. In Fig.1a ist der Einfachheit halber nur ein Transportsegment 2 gezeigt, natürlich könnte aber auch eine Vielzahl von Transportsegmenten 2 (auch verschiedene) aneinandergereiht werden, um den Stator und eine größere Bewegungsebene 3 auszubilden. Dadurch kann die Transporteinrichtung 1 modular aufgebaut werden und es können Bewegungsebenen 3 verschiedener Form und Größe realisiert werden. Natürlich ist dieser modulare Aufbau aber nur optional und es könnte auch nur ein einziges Transportsegment 2 in Form einer einzigen Baugruppe vorgesehen sein. In der Bewegungsebene 3 des Transportsegments 2 können natürlich auch mehrere, und auch unterschiedliche, Transporteinheiten TEn gleichzeitig und unabhängig voneinander bewegt werden.

Am Transportsegment 2 sind eine erste Spulengruppe SG1 mit mehreren Antriebsspulen AS1, welche die erste Hauptbewegungsrichtung H1 definiert und eine zweite Spulengruppe SG2 mit mehreren Antriebsspulen AS2, welche die zweite Hauptbewegungsrichtung H2 definiert angeordnet. Allgemein werden die Antriebsspulen auch mit ASi bezeichnet, wobei "i" ein Index ist, um die Antriebsspulen gegebenenfalls unterscheiden zu können. Die Antriebsspulen AS1 der ersten Spulengruppe SG1 sind in einer bestimmten Richtung, hier in X-Richtung eines kartesischen Koordinatensystems, hintereinander angeordnet, um die erste Hauptbewegungsrichtung H1 für die Bewegung der Transporteinheit TEn auszubilden, die sich hier entlang der X-Achse erstreckt. Die Antriebsspulen AS2 der zweiten Spulengruppe SG2 sind in einer bestimmten Richtung, hier der Y-Richtung des kartesischen Koordinatensystems, hintereinander angeordnet, um eine zweite Hauptbewegungsrichtung H2 für die Transporteinheit TEn auszubilden, die sich hier entlang der Y-Achse erstreckt. Vorzugsweise sind die Antriebsspulen AS1, AS2 der ersten und zweiten Spulengruppen SG1, SG2, so wie in Fig.1a dargestellt, relativ zueinander so angeordnet, dass die beiden Hauptbewegungsrichtungen H1, H2 orthogonal zueinander sind.

An der zumindest einen Transporteinheit TEn sind mehrere Antriebsmagnete 4 angeordnet, die mit Antriebsspulen AS1, AS2 zumindest einer der zwei Spulengruppen SG1, SG2 im Bereich der Transporteinheit TEn elektromagnetisch zur Bewegung der Transporteinheit TEn zusammenwirken. Die Transporteinheit TEn weist dazu in der Regel einen Grundkörper 9 auf, an dessen (der Bewegungsebene 3 zugewandten) Unterseite die Antriebsmagnete 4 angeordnet sind, wie in Fig.1b ersichtlich ist. In Fig.1a ist der Grundkörper 9 jeweils großteils aufgebrochen dargestellt, um die Anordnung der Antriebsmagnete 4 erkennen zu können. Wie in Fig.1b angedeutet sind die Antriebsmagnete 4 in mehreren Magnetgruppen MGa, MGb angeordnet. Die Antriebsmagnete 4 sind üblicherweise mit abwechselnder Polarität angeordnet, wie in Fig.1b angedeutet. Die Antriebsmagnete 4 können in den verschiedenen Magnetgruppen Mga, MGb auch unterschiedlich ausgerichtet sein.

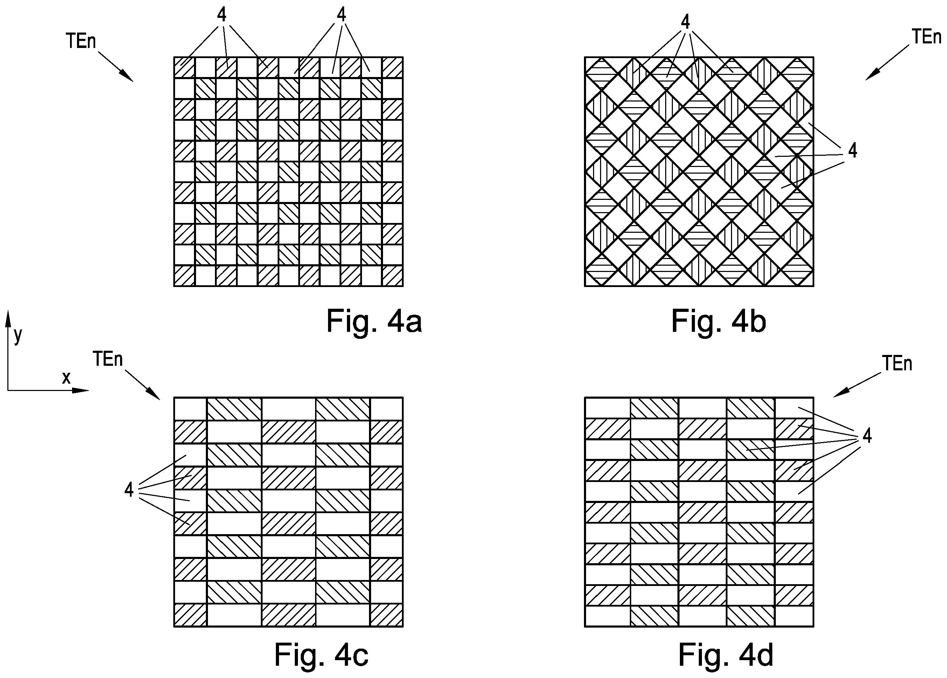

Im gezeigten Beispiel sind zwei erste Magnetgruppen MGa und zwei zweite Magnetgruppen MGb an der Transporteinheit TEn angeordnet. Zum Bewegen der Transporteinheit TEn in der Bewegungsebene 3 genügen im Wesentlichen auch eine einzige erste Magnetgruppe MGa und eine einzige zweite Magnetgruppe MGb je Transporteinheit TEn. Natürlich können aber auch mehr als zwei erste Magnetgruppen MGa und mehr als zwei zweite Magnetgruppen MGb pro Transporteinheit TE angeordnet sein. Auch eine ungleiche Anzahl von ersten und zweiten Magnetgruppen MGa, MGb wäre denkbar, beispielsweise zwei erste Magnetgruppen MGa und eine zweite Magnetgruppe MGb. In den Magnetgruppen MGa, MGb sind jeweils mehrere, in einer bestimmten Anordnungsrichtung nebeneinander angeordnete Antriebsmagnete 4 unterschiedlicher Magnetisierungsrichtung vorgesehen. Die Anordnungsrichtung der ersten Magnetgruppen MGa entspricht hier der X-Richtung und die Anordnungsrichtung der zweiten Magnetgruppen MGb entspricht der Y-Richtung. Die Anordnungsrichtungen stehen damit analog zu den Hauptbewegungsrichtungen H1, H2 vorzugsweise orthogonal aufeinander. Vorzugsweise verlaufen die Anordnungsrichtungen der Magnetgruppen MGa, MGb möglichst parallel zu den Hauptbewegungsrichtungen H1, H2, um eine möglichst effiziente elektromagnetische Krafterzeugung zu ermöglichen. Im dargestellten Beispiel handelt es sich um eine bekannte 1-D Anordnung der Antriebsmagnete 4 an der Transporteinheit TEn, es wäre aber auch eine ebenfalls bekannte 2D-Anordnung möglich, wie anhand Fig.4a-4d noch im Detail erläutert wird.

Mit dem dargestellten Planarmotor 1 wäre beispielsweise in der Bewegungsebene 3 des Transportsegments 2 eine im Wesentlichen uneingeschränkte Bewegung einer Transporteinheit TEn in den beiden Hauptbewegungsrichtungen H1, H2 möglich. Die Transporteinheit TEn könnte dabei beispielsweise jeweils nur entlang der X-Achse oder nur entlang der Y-Achse bewegt werden. Die Transporteinheit TEn kann aber natürlich gleichzeitig in beiden Hauptbewegungsrichtungen H1, H2 bewegt werden, z.B. entlang eines in der Bewegungsebene 3 liegenden zweidimensionalen Bewegungspfades BPn mit einer X-Koordinate und einer Y-Koordinate, wie an der Transporteinheit TEn in Fig.1a angedeutet ist. Bei entsprechender konstruktiver Ausführung des Transportsegments 2 und der jeweiligen Transporteinheit TEn können in bekannter Weise auch die anderen vier Bewegungsfreiheitsgrade zumindest eingeschränkt verwendet werden (translatorische Bewegung in Hochrichtung Z + Rotation um die drei Achsen X, Y, Z).

Antriebsspulen ASi können in Normalrichtung (hier in Z-Richtung) gesehen auch übereinander angeordnet sein. In der Ausführung nach Fig.1b sind die Antriebsspulen AS1 der ersten Spulengruppe SG1 in Normalrichtung (hier in Z-Richtung) auf die Bewegungsebene 3 näher an der Bewegungsebene 3 angeordnet, als die Antriebsspulen AS2 der zweiten Spulengruppe SG2.

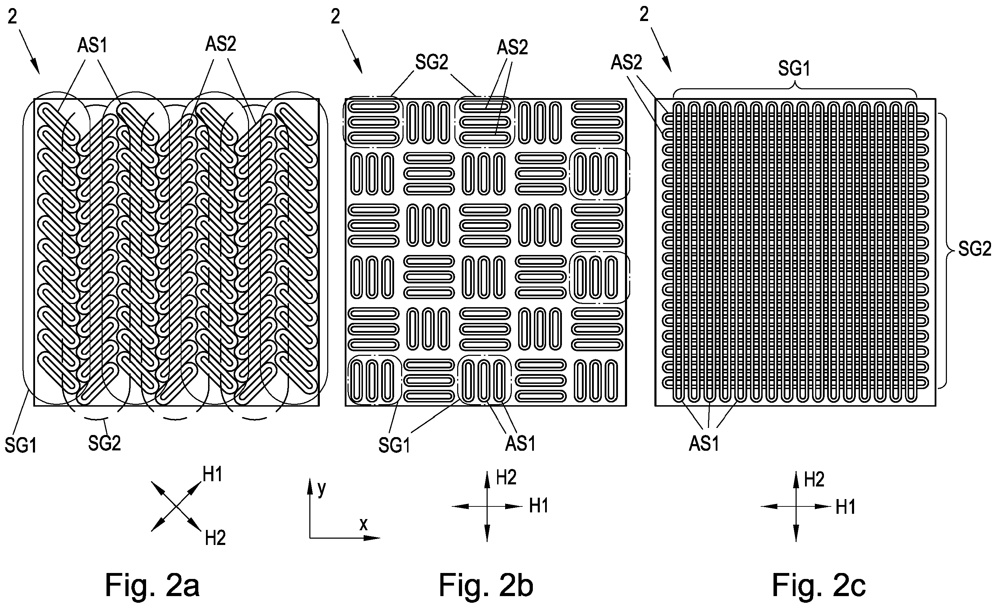

In Fig.2a-2e sind schematisch, beispielhaft und nicht einschränkend verschiedene Möglichkeiten einer Anordnung von Antriebsspulen ASi an einem Transportsegment dargestellt. Fig.2a+2b zeigen sogenannte "single-layer" bzw. Einzelschicht-Varianten, bei der die ersten und zweiten Spulengruppen SG1, SG2 in der gleichen Ebene angeordnet sind. Fig.2c-2e zeigen sogenannte "double-layer" bzw. Mehrschicht-Bauweisen, bei denen die ersten und zweiten Spulengruppen SG1, SG2 geschichtet in Hochrichtung übereinander angeordnet sind, wie zuvor anhand Fig.1b erläutert wurde.

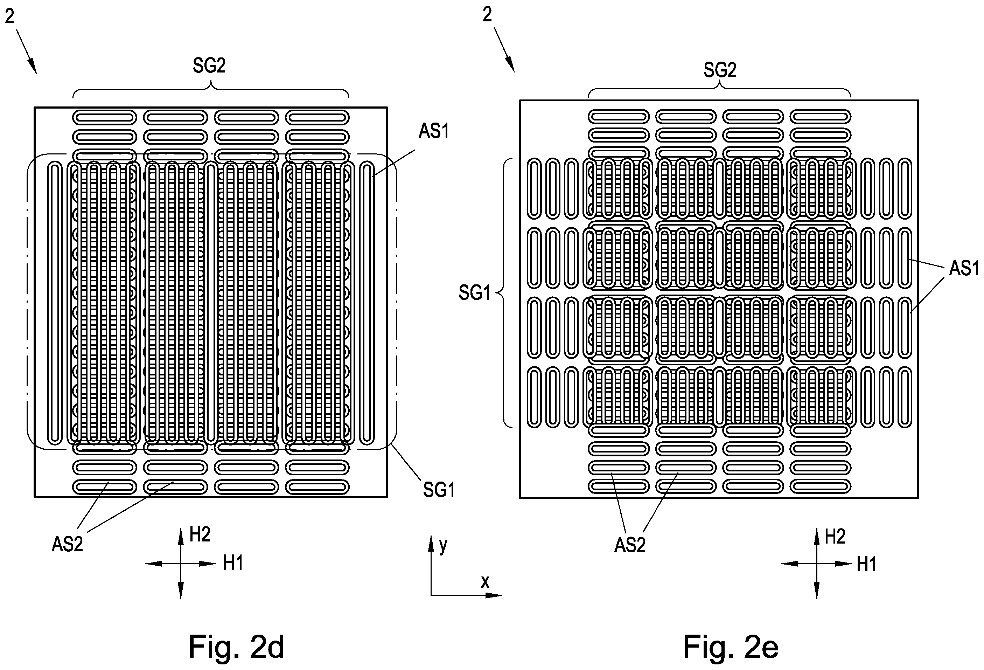

In Fig.2a ist eine sogenannte "Fischgrät"-Anordnung der Antriebsspulen AS1, AS2 der zwei Spulengruppen SG1, SG2 dargestellt. Im Gegensatz zu den anderen Ausführungen der Fig.2b-2e verlaufen die beiden Hauptbewegungsrichtungen H1, H2 hier nicht parallel zu den Kanten des Transportsegments 2 (hier in X- und Y-Richtung), sondern schräg dazu. In Fig.2c ist eine "double-layer" Ausführungsform gezeigt, in der sowohl in der ersten Spulengruppe SG1, als auch in der zweiten Spulengruppe SG2 "lange" Antriebsspulen AS1, AS2 vorgesehen sind. Fig.2d zeigt eine Ausführungsform mit "langen" Antriebsspulen AS1 in der ersten Spulengruppe SG1 und "kurzen" Antriebsspulen AS2 in der zweiten Spulengruppe SG2. Fig.2e zeigt ein Beispiel mit "kurzen" Antriebsspulen AS1 in der ersten Spulengruppe SG1 und "kurzen" Antriebsspulen AS2 in der zweiten Spulengruppe SG2, wobei die Spulengruppen übereinander angeordnet sind.

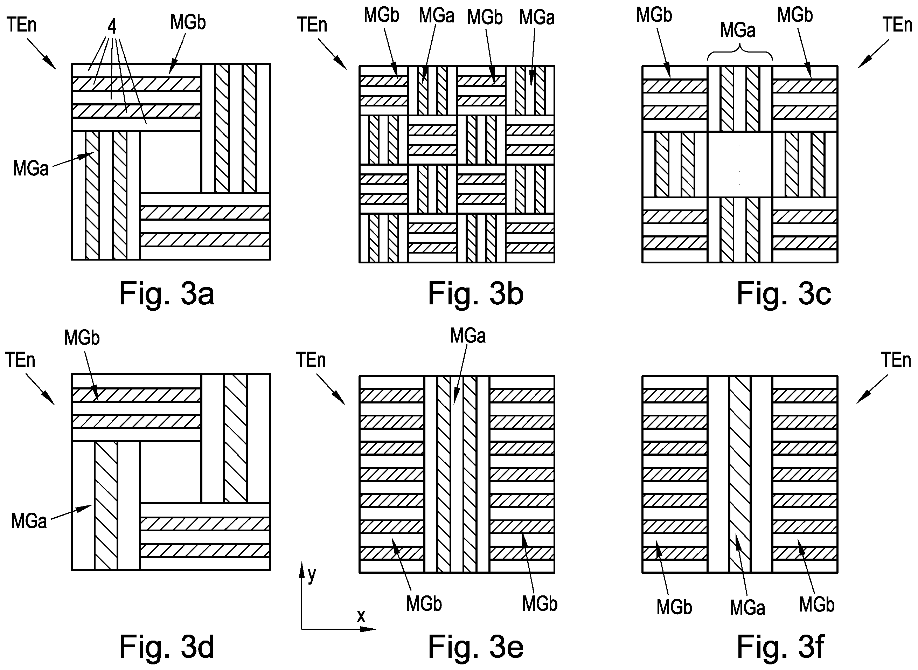

In Fig.3a-f und Fig.4a-d sind schematisch und beispielhaft verschiedene Anordnungen von Antriebsmagneten 4 an einer Transporteinheit TEn dargestellt. Man unterscheidet grundsätzlich zwischen einer sogenannten 1D-Anordnung (Fig.3a-3f) und einer 2D-Anordnung (Fig.4a-4d). Bei der 1D-Anordnung sind jeweils zumindest eine erste Magnetgruppe MGa mit mehreren Antriebsmagneten 4 für die erste Hauptbewegungsrichtung H1 (hier X-Achse) und zumindest eine zweite Magnetgruppe MGb mit mehreren Antriebsmagneten 4 für die zweite Hauptbewegungsrichtung H2 (hier Y-Achse) vorgesehen. Die Magnetgruppen MGa, MGb weisen jeweils eine bestimmte Anzahl von in einer bestimmten Anordnungsrichtung (hier MGa in X-Richtung und MGb in Y-Richtung) hintereinander angeordneten Antriebsmagneten 4, insbesondere Permanentmagnete auf. Benachbarte Antriebsmagnete 4 weisen dabei eine unterschiedliche Magnetisierungsrichtung auf. Beispielsweise kann die Magnetisierungsrichtung benachbarter Antriebsmagnete 4 um 180° zueinander gedreht sein, also abwechselnd magnetischer Nord- und Südpol, wie durch die schraffierten und nicht schraffierten Antriebsmagneten 4 angedeutet ist. Die Antriebsmagnete 4 einer Magnetgruppe MGi können aber auch in der bekannten Halbach-Anordnung angeordnet sein, wobei beispielsweise zwischen Antriebsmagneten 4 mit entgegengesetzter Magnetisierungsrichtung (Nordpol, Südpol) jeweils ein Antriebsmagnet 4 mit um 90° dazu gedrehter Magnetisierungsrichtung vorgesehen ist. Die Halbach-Anordnung hat den Vorteil, dass der magnetische Fluss auf einer Seite der Magnetgruppe MGj (vorzugsweise die der Bewegungsebene 3 zugewandte Seite) größer ist als auf der gegenüberliegenden Seite. Die Halbach-Anordnung ist im Stand der Technik bekannt, weshalb an dieser Stelle auf weitere Details verzichtet wird.

Bei der 2D-Anordnung sind einzelne Antriebsmagnete 4 unterschiedlicher Magnetisierungsrichtung im Wesentlichen schachbrettartig an der Transporteinheit TE angeordnet. Die Antriebsmagnete 4 unterschiedlicher Magnetisierungsrichtung sind dabei in zwei Anordnungsrichtungen (hier X- und Y-Richtung) jeweils abwechselnd und versetzt angeordnet. Die beiden Richtungen sind dabei vorzugsweise so zueinander orientiert wie die beiden Hauptbewegungsrichtungen H1, H2, stehen also beispielsweise normal aufeinander. Es ist unmittelbar ersichtlich, dass sich eine Vielzahl von verschiedenen Möglichkeiten der Anordnung ergibt, wobei die gängigsten Varianten der 1D-Anordnung in Fig.3a-3f dargestellt sind und die gängigsten Varianten der 2D-Anordnung in Fig.4a-4d. Bei der 2D-Anordnung entspricht die erste Magnetgruppe MGa den in einer Richtung abwechselnd angeordneten Antriebsmagneten 4 (z.B. in X-Richtung) und die zweite Magnetgruppe MGb entspricht den in der jeweils anderen Richtung abwechselnd angeordneten Antriebsmagneten 4 (z.B. in Y-Richtung). Die Magnetgruppen MGa, MGb sind bei der 2D-Anordnung damit nicht getrennt, so wie bei der 1D-Anordnung, sondern die Antriebsmagnete 4 sind sowohl Teil der ersten Magnetgruppen MGa, als auch Teil der zweiten Magnetgruppen MGb.

Im Planarmotor 1 ist auch eine Steuereinheit 10 vorgesehen, mit welcher die Antriebsspulen ASi des Transportsegments 2 zum Bestromen angesteuert werden können, wie in Fig.1a angedeutet ist. Im Wesentlichen bedeutet das, dass die Antriebsspulen ASi von der Steuereinheit 10 so bestromt werden, dass die Transporteinheit TEn einen gewünschten Bewegungspfad BPn in der Bewegungsebene 3 ausführt, wobei der Bewegungspfad BPn nicht nur auf eine Bewegung in den Hauptbewegungsrichtungen H1, H2 beschränkt ist, sondem auch Bewegungen in den vier anderen Freiheitsgraden vorgeben kann. Der Bewegungspfad BPn ist üblicherweise vorgegeben, beispielsweise zur Realisierung einer Transportaufgabe mit dem Planarmotor 1 als Transporteinrichtung oder in Abhängigkeit eines bestimmten Produktionsprozesses einer Anlage, in der der Planarmotor 1 als Transporteinrichtung integriert ist.

Der Planarmotor 1, konkreter die Antriebsspulen ASi des Planarmotors 1, wird so von der Steuereinheit 10 gesteuert, sodass sich eine Transporteinheit TEn entlang des gewünschten Bewegungspfades BPn in der Bewegungsebene 3 bewegt. Zur Bewegung kann ein bestimmtes Bewegungsprofil mit Bewegungsgrößen (auch in unterschiedlichen Raumrichtungen) der Transporteinheit TEn wie Geschwindigkeit, Beschleunigung, usw. vorgegeben sein.

Für die Umsetzung des Bewegungspfades BPn in der Steuereinheit 10 wird üblicherweise auch ein Istwert der Bewegung der Transporteinheit TEn, beispielsweise eine Istposition (auch eine Istausrichtung der Transporteinheit TEn) oder eine Istgeschwindigkeit, verwendet. Hierfür können am Transportsegment 2 auch geeigneten Sensoren, beispielsweise Positionssensoren, angeordnet sein, deren erfassten Messgrößen als Istwerte an die Steuereinheit 10 übermittelt werden oder aus denen in der Steuereinheit 10 Istwerte ermittelt werden.

Die Steuereinheit 10 kann auch als verteilte Steuerung ausgeführt sein, beispielsweise mit einer Anzahl von Spulensteuereinheiten 5, vorzugsweise eine Spulensteuereinheit 5 pro Antriebsspule ASi, und einer übergeordneten Anlagensteuereinheit 6, die, beispielsweise über ein Kommunikationsnetzwerk, mit der Anzahl der Spulensteuereinheit 5 verbunden ist. Es kann auch eine Segmentsteuereinheit vorgesehen sein, die einerseits mit der Anlagensteuereinheit 6 und andererseits mit der Anzahl von Spulensteuereinheiten 5 verbunden ist, beispielsweise jeweils über ein Kommunikationsnetzwerk. Die Spulensteuereinheiten 5, die Anlagensteuereinheit 6 und gegebenenfalls Segmentsteuereinheit teilen sich dann die Steuerung einer Transporteinheit TEn in vorgegebener Weise untereinander auf. Beispielsweise kann die Anlagensteuereinheit 6 die Transportaufgabe umsetzen und hierfür der Segmentsteuereinheit Zielpunkte für die Transporteinheit TEn in der Bewegungsebene 3 vorgegeben. Die Anlagensteuereinheit 6 kann auch dazu dienen, um potentielle Kollisionen zwischen Transporteinheiten TEn zu erkennen und/oder zu verhindern. Die Segmentsteuereinheit kann dann für die Transporteinheit TEn einen Bewegungspfad BPn zum Anfahren des Zielpunktes ermitteln und zur Umsetzung des Bewegungspfades BPn Sollwerte, beispielsweise Sollspulenspannungen oder Sollspulenströme, für die an der Bewegung beteiligten Antriebsspulen ASi ermitteln. Die Sollwerte werden dann an die Spulensteuereinheiten 5 an der Bewegung beteiligten Antriebsspulen ASi übergeben, die dann von den Spulensteuereinheiten 5 umgesetzt werden. Hierfür kann an einem Transportsegment 2 auch eine Leistungselektronik vorgesehen sein, die die benötigen Spulenspannungen oder Spulenströme erzeugt und an die Antriebsspulen ASi anlegt. Es ist auch denkbar, dass für jedes Transportsegment 2, oder für eine Gruppe von Transportsegmenten 2, eine Segmentsteuereinheit vorgesehen ist, die dann für die Realisierung des Bewegungspfades BPn auf dem zugeordneten Transportsegment 2 zuständig ist.

Eine Steuereinheit kann als mikroprozessorbasierte Hardware, beispielsweise als Computer, Mikrocontroller, Digital Signal Processor (DSP), speicherprogrammierbare Steuerung (SPS) usw., implementiert sein, auf der entsprechende Steuerungsprogramme zur Umsetzung der jeweiligen Funktion laufen. Auch eine Ausführung als integrierter Schaltkreis, wie z.B. als anwendungsspezifische integrierte Schaltung (ASCI) oder Field Programmable Gate Array (FPGA), ist denkbar.

Durch entsprechende Ansteuerung der ersten Antriebsspulen AS1 wird ein im Wesentlichen bewegtes Magnetfeld in der ersten Hauptbewegungsrichtung H1 erzeugt. Das bewegte Magnetfeld in der ersten Hauptbewegungsrichtung H1 wirkt vorwiegend mit den Antriebsmagneten 4 der ersten Magnetgruppe(n) MGa elektromagnetisch zusammen, um die jeweilige Transporteinheit TEn in der ersten Hauptbewegungsrichtung H1 zu bewegen. Analog wird durch die Ansteuerung der zweiten Antriebsspulen AS2 ein im Wesentlichen bewegtes Magnetfeld in der zweiten Hauptbewegungsrichtung H2 erzeugt, das vorwiegend mit den Antriebsmagneten 4 der zweiten Magnetgruppe(n) MGb elektromagnetisch zusammenwirkt, um die Transporteinheit TEn in der zweiten Hauptbewegungsrichtung H2 zu bewegen. Je nach Ansteuerung der Antriebsspulen AS1, AS2 resultiert eine Überlagerung der bewegten Magnetfelder, wodurch die Transporteinheit TEn in gewünschter Weise entlang des vorgegebenen zweidimensionalen Bewegungspfades BPn in der Bewegungsebene 3 bewegt werden kann.

Neben der beiden im Wesentlichen unbegrenzten translatorischen Bewegungsfreiheitsgraden in den Hauptbewegungsrichtungen H1, H2 in der Bewegungsebene 3 ist auch eine begrenzte translatorische Bewegung einer Transporteinheit TEn in Normalrichtung auf die Bewegungsebene 3 möglich, hier in Richtung der Z-Achse. Je nach Anordnung und konstruktiver Ausgestaltung der Antriebsspulen AS1, AS2 der Spulengruppen SG1, SG2 sowie der damit zusammenwirkenden ersten und zweiten Magnetgruppen MGa, MGb ist auch eine, zumindest begrenzte, Rotation der Transporteinheiten TEn um die drei Raumachsen X, Y, Z möglich. Um die Hochachse Z kann auch eine vollständige Rotation realisiert werden.

Die Antriebsspulen ASi werden üblicherweise so angesteuert, dass eine Kraft in Richtung der Z-Achse auf die Transporteinheit TEn wirkt, mit der die Transporteinheit TEn über der Bewegungsebene 3 zum Erzeugen eines Luftspaltes L (Fig.1b) frei schwebend gehalten wird (was auch während des Stillstandes der Transporteinheit TEn möglich ist).

Durch eine entsprechende Ansteuerung der Antriebsspulen ASi kann der Luftspalt L bedarfsweise in begrenztem Maße auch erhöht und verringert werden, wodurch die Transporteinheit TE in Hochrichtung bewegt werden kann, hier in Z-Richtung, wie durch den Doppelpfeil an der Transporteinheit TEn in Fig.1b angedeutet ist. Die Größe des verfügbaren Bewegungsspielraums in Hochrichtung hängt dabei im Wesentlichen von der konstruktiven Ausgestaltung des Planarmotors 1 ab, insbesondere vom maximal erzeugbaren Magnetfeld der Antriebsspulen ASi und der Ausführung und Anordnung der Antriebsmagnete 4, sowie der Masse und Belastung der Transporteinheit TEn.

Die obigen Ausführungen zu Aufbau und Funktion eines Planarmotors 1 dienen lediglich der Erläuterung und sind nicht einschränkend zu verstehen und dienen dem besseren Verständnis. Für die gegenständliche Erfindung ist es unerheblich, wie der Planarmotor 1 aufgebaut ist. Entscheidend für die Erfindung ist, dass eine Mehrzahl von Transporteinheiten TEn in der Bewegungsebene 3 des Planarmotors 1 entlang von Bewegungspfaden BPn bewegt werden können. Hierbei sind zumindest zwei Bewegungspfade BPn vorgesehen und jede Transporteinheit TEn kann grundsätzlich auf jedem Bewegungspfade BPn bewegt werden.

Ein Bewegungspfad BPn kann ein offener Pfad sein, also ein Pfad dessen Anfang und Ende nicht zusammenfallen, oder auch ein geschlossener Pfad, also ein Pfad, dessen Anfang und Ende zusammenfallen.

Die Bewegungspfade BPn der am Planarmotor 1 bewegten Transporteinheiten TEn werden üblicherweise vorab geplant, beispielsweise um mit dem Planarmotor 1 eine bestimmte Transportaufgabe zu realisieren. Zusätzlich oder auch altemativ kann ein Bewegungspfad BPn, oder auch ein Teil davon, während des Betriebs ermittelt oder festgelegt werden, um eine weitere Flexibilität zu gewährleisten. Die Bewegungspfade BPn der Transporteinheiten TEn in der Bewegungsebene 3 können für die Durchführung der Erfindung jedenfalls als bekannt angenommen werden.

Nachdem ein Bewegungspfad BPn frei in der Bewegungsebene 3 definiert sein kann, kann es passieren, dass sich zwei Bewegungspfade BPn kreuzen oder dass sich zwei Bewegungspfade BPn nahe kommen, sodass die Gefahr einer Kollision zwischen zwei Transporteinheiten TEn, die sich auf den Bewegungspfaden BPn bewegen, besteht. Es ist auch denkbar, dass sich ein Bewegungspfad BPn selbst kreuzt oder zu nahe kommt, oder dass ein Bewegungspfad BPn im Bereich eines hinsichtlich der Lage und Größe definierten Hindernisses in der Bewegungsebene befindet. Auch in diesen Fällen besteht die Gefahr einer Kollision einer Transporteinheit TEn mit einer anderen Transporteinheit TEn oder mit einem Hindernis. Als Kollision wird dabei jegliche unerwünschte, durch die Bewegung verursachte Berührung zwischen zwei Transporteinheiten TEn (was auch ein damit transportiertes Objekt O umfasst) oder zwischen einer Transporteinheit TEn und einem Hindernis angesehen. Nachdem sich die Transporteinheiten TEn in der Bewegungsebene 3 frei bewegen können, kann eine Kollision praktisch in jeder Richtung passieren. Im Betrieb des Planarmotor 1, beispielsweise als Transporteinrichtung zum Transport von Objekten O, sind solche Kollisionen aber üblicherweise unerwünscht und sollen vermieden werden. Im Ausnahmefall können auch Situationen auftreten, bei denen sich Transporteinheiten TEn in gewünschter Weise sehr nahe kommen oder sich sogar berühren. Dies ist beispielsweise der Fall, wenn sich mehrere Transporteinheiten TEn zusammenschließen, um höhere Kräfte oder größere/schwerere Produkte transportieren zu können. Denkbar wäre auch, dass zwei Transporteinheiten TEn durch das Bewegen relativ zueinander eine Kraft auf ein Werkstück aufbringen und so einen Arbeitsprozessschritt durchführen. Solche "gewollte Kollisionen" sind natürlich nicht unerwünscht und sollen demzufolge auch nicht vermieden werden.

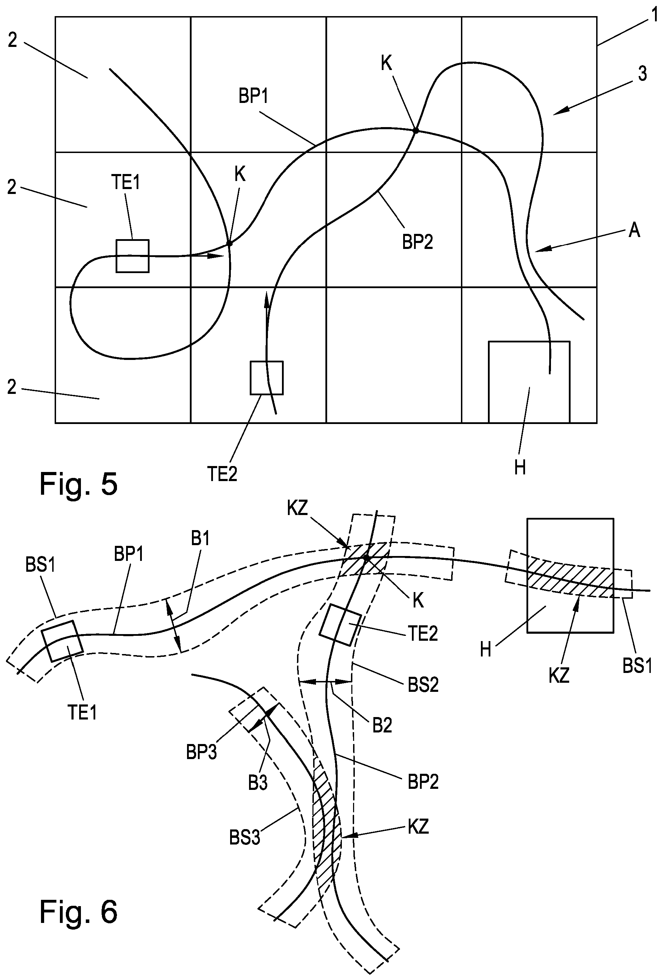

Das grundsätzliche Problem mit unerwünschten Kollisionen ist in Fig.5 schematisch dargestellt. Der Stator des Planarmotors 1 besteht aus zumindest einem, in diesem Ausführungsbeispiel aus mehreren Transportsegmenten 2, die wie oben beschrieben die Bewegungsebene 3 ausbilden. Antriebsspulen ASi und Antriebsmagnete 4 sind hier aus Gründen der Übersichtlichkeit nicht dargestellt. In der Bewegungsebene 3 soll eine erste Transporteinheit TE1 entlang eines ersten Bewegungspfades BP1 bewegt werden. Eine zweite Transporteinheit TE2 soll gleichzeitig entlang eines zweiten Bewegungspfades BP2 bewegt werden. Der erste Bewegungspfad BP1 und der zweite Bewegungspfad BP2 kreuzen sich allerdings, sodass im Bereich des Kreuzungspunktes K die Gefahr einer unerwünschten Kollision zwischen den auf den Bewegungspfaden BP1, BP2 bewegten Transporteinheiten TE1, TE2 besteht. Eine Kollision kann dann eintreten, wenn sich die beiden Transporteinheiten TE1, TE2 gleichzeitig in der Nähe des Kreuzungspunktes K bewegen. Eine Kollisionsgefahr besteht aber auch dann, wenn sich die beiden Bewegungspfade BP1, BP2 in einem Annährungsbereich A zu nahe kommen, sich aber nicht kreuzen, sodass sich die darauf bewegten Transporteinheiten TE1, TE2 berühren könnten, wenn sich die beiden Transporteinheit TE1, TE2 gleichzeitig in der Nähe des Annäherungsbereiches A bewegen. Ein solcher Annährungsbereich A ist in Fig.5 dargestellt. Eine Kollisionsgefahr besteht auch, wenn ein Bewegungspfad BPn im Bereich eines hinsichtlich der Lage und Geometrie definierten Hindernis H in der Bewegungsebene 3 überlappt, wie in Fig.5 am Beispiel des Bewegungspfades BP1 dargestellt. Für die Kollisionsgefahr ist es unerheblich, in welche Richtung sich die Transporteinheit TE1, TE2 entlang des jeweiligen Bewegungspfades BP1, BP2 bewegen.

Um Kollisionen zwischen Transporteinheiten TEn oder zwischen einer Transporteinheit TEn und einem Hindernis H zu vermeiden, ist es einerseits erforderlich eine Kollisionsgefahr zu erkennen und andererseits auch erforderlich, bei einer erkannten Kollisionsgefahr entsprechende Schritte zur Kollisionsvermeidung zu setzen. Nachdem eine Kollisionserkennung und Kollisionsvermeidung rechentechnisch sehr aufwendig sind, wird erfindungsgemäß früher angesetzt und es wird versucht, die Bewegungspfade BPn möglichst so zu planen, dass es gar nicht zu Kollisionen kommen kann oder die Stellen in der Bewegungsebene 3 an denen es zu einer Kollision kommen kann, zumindest verringert werden.

Zur Vermeidung von Kollisionen, zumindest zur Reduzierung der Gefahr von Kollisionen, ist vorgesehen, dass jeder Bewegungspfad BPn in der Bewegungsebene 3, zumindest in Bewegungsrichtung abschnittsweise, zweidimensional um den Bewegungspfad BPn zu einer Bewegungsstraße BSn in der Bewegungsebene 3 ausgedehnt wird. Hierfür wird zumindest abschnittsweise an jeder Stelle der Bewegungspfade BP1, BP2 eine Breite B1, B2 der Bewegungsstraße BS1, BS2 vorgegeben, wie in Fig.6 dargestellt. Abschnittsweise deshalb, weil die Bewegungsstraße BSn nicht zwingend entlang der gesamten Länge des Bewegungspfades BPn vorgegeben werden muss. Grundsätzlich reicht es aus, wenn die Bewegungsstraße BSn nur entlang gewisser Abschnitte des Bewegungspfades BPn definiert wird. Beispielsweise muss keine Bewegungsstraße BSn definiert werden in Abschnitten, wo man aufgrund des Aufbaus des Planarmotors 1 oder aufgrund anderer Gegebenheiten von vornherein weiß, dass es keine Kollisionen zwischen Transporteinheiten TEn auf unterschiedlichen Bewegungspfaden BPn oder mit einem Hindernis H geben kann. Das kann beispielsweise der Fall sein, wenn an bestimmten Abschnitten generell nur ein einziger Bewegungspfad BPn für alle Transporteinheiten TEn vorgesehen ist.

Die Breite Bn ist an jeder Stelle des Bewegungspfades BPn, an der eine Bewegungsstraße BSn vorhanden ist, definiert, beispielsweise konfiguriert, und ist somit bekannt. Eine Transporteinheit TEn (vorzugsweise inklusive eines damit transportierten Objekts), die auf einem Bewegungspfad BPn bewegt wird, wird von einer darauf definierten Bewegungsstraße BSn vorzugsweise vollständig umfasst. Das bedeutet, dass die Transporteinheit TEn an keiner Stelle aus der Bewegungsstraße BSn vorsteht.

Die Breite Bn kann, neben der Position entlang des Bewegungspfades BPn, auch von anderen Einflussfaktoren abhängig sein, wie beispielsweise vom Typ oder der Größe der Transporteinheit TEn, von einer Ausdehnung eines mit einer Transporteinheit TEn transportierten Objekts O, von einer Rotation der Transporteinheit TEn um eine Hochachse (z.B. in Z-Richtung) oder einer anderen Achse, von einem maximal erwartbaren Positionierfehler (z.B. die Abweichung zwischen einer Sollposition und einer Istposition) der Regelung der Bewegung, einer maximalen Geschwindigkeit, von einem vorgegebenen Sicherheitsabstand usw. Die Breite Bn oder der Verlauf der Breite Bn entlang eines Bewegungspfades BPn kann aber auch einfach fest konfiguriert sein, beispielsweise in der Steuereinheit 10.

Die Breite Bn in der Bewegungsebene 3 ist vorzugsweise jeweils orthogonal auf den jeweiligen Bewegungspfad BPn. Auf einer Geraden somit in der Bewegungsebene 3 normal auf den Bewegungspfad BPn und in einer Kurve normal auf die Tangente auf den Bewegungspfad BPn.

Die Breite Bn muss aber nicht symmetrisch bezogen auf den Bewegungspfad BPn vorgegeben sein, sondern kann durchaus auch asymmetrisch um den Bewegungspfad BPn vorgegeben sein, also die Anteile der Breite Bn zu beiden Seiten (in Bewegungsrichtung gesehen) des Bewegungspfades BPn unterschiedlich sind.

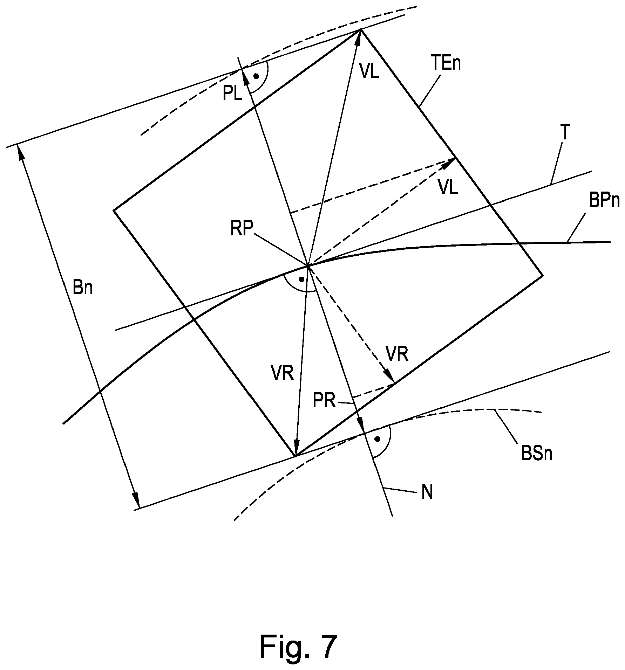

Um die Breite Bn an einer bestimmten Position entlang des Bewegungspfades BPn zu ermitteln kann in einer möglichen Ausgestaltung wie mit Bezugnahme auf Fig.7 erläutert vorgegangen werden. Hierbei geht man davon aus, dass der Bewegungspfad BPn einer Transporteinheit TEn bezogen auf einem Referenzpunkt RP der Transporteinheit TEn vorgegeben und damit bekannt ist. Der Referenzpunkt RP kann dabei grundsätzlich ein beliebiger Punkt der Transporteinheit TEn sein, beispielsweise ein geometrischer Mittelpunkt oder die Lage des Schwerpunktes der Transporteinheit TEn in der Bewegungsebene 3. Nachdem die Geometrie der Transporteinheit TEn bekannt ist, können an jeder Seite (bezogen auf den Bewegungspfad BPn) Vektoren VL, VR vom Referenzpunkt RP zur Außenkontur der Transporteinheit TEn in der Bewegungsebene 3 (gegebenenfalls unter Berücksichtigung eines transportierten Objekts) ermittelt werden. Diese Vektoren VL, VR werden auf die Normale N auf den Bewegungspfad BPn (bzw. auf die Tangente T auf den Bewegungspfad BPn) projiziert. Die jeweils längste Projektion PL, PR auf jeder Seite werden dann addiert und die Summe der längsten Projektionen PL, PR wird dann als Breite Bn an dieser Stelle des Bewegungspfades BPn herangezogen, also Bn = (PL + PR). Daraus ergibt sich beispielsweise eine bezogen auf den Bewegungspfad BPn asymmetrische Breite Bn, wenn die längste Projektionen PL, PR unterschiedlich sind. Dieses Vorgehen ermöglicht für eine Transporteinheit TEn eine rechnerische Ermittlung der Breiten Bn der Bewegungsstraße BSn an jeder gewünschten Stelle des Bewegungspfades BPn. Hierbei wird automatisch die Dimension der Transporteinheit TEn, und gegebenenfalls eines damit transportierten Objekts O, sowie auch eine Rotation um die Hochachse (oder anderer Achsen) berücksichtigt, weil die Lage und Ausrichtung der Transporteinheit TEn in diese Ermittlung einfließen. Ebenso kann dabei einfach ein Sicherheitsabstand berücksichtigt werden, in dem die Vektoren VL, VR, oder deren Projektionen PL, PR, einfach um einen bestimmten Wert verlängert werden. Ein solcher Sicherheitsabstand kann dabei auch von einer Bewegungsgröße einer Transporteinheit TEn abhängig sein, wie einer Geschwindigkeit oder Beschleunigung. Bei der Ermittlung der Breiten Bn kann auch die Außenkontur vereinfacht werden, beispielsweise indem eine einfache zweidimensionale oder dreidimensionale geometrische Figur (oder Körper), wie ein Kreis, Rechteck oder Vieleck, um die Außenkontur der Transporteinheit TEn gelegt wird, und die Ermittlung der Vektoren VL, VR und der längsten Projektionen PL, PR dann auf Basis dieser geometrischen Figur (Körper) erfolgt. Die Ermittlung der Breiten Bn kann beispielsweise offline erfolgen, beispielsweise vor dem Starten der Transportaufgabe. Die Breiten Bn können aber bedarfsweise auch online während des Betriebs neu ermittelt werden, beispielsweise wenn eine Transporteinheit TEn neu beladen wird.

Die Breite Bn einer Bewegungsstraße BSn kann aber auch ermittelt werden, in dem eine Bewegung einer Transporteinheit TEn eines Bewegungspfades BPn simuliert wird. Hierzu sind Simulationstools verfügbar, mit denen solche Simulationen durchgeführt werden können. Im Wesentlichen wird mit der Simulation die Bewegung einer zweidimensionalen geometrischen Figur oder eines dreidimensionalen Körpers in der Bewegungsebene 3 simuliert. Auch in diesem Fall kann eine einfache geometrische Figur (Körper) um die Außenkontur der Transporteinheit TEn gelegt werden, um die Simulation zu vereinfachen. Die Transporteinheit TEn (oder die umgebende Figur / Körper) überstreicht dabei eine bestimmte Fläche in der Bewegungsebene 3 (bei einer dreidimensionalen Simulation gegebenenfalls projiziert auf die Bewegungsebene 3). Dies Fläche wird sich zu beiden Seiten des Bewegungspfades BPn (in Bewegungsrichtung gesehen) erstrecken, woraus die Breite Bn an jeder gewünschten Stelle ermittelbar ist. Es kann auch die Einhüllende dieser Fläche in der Bewegungsebene 3 ermittelt werden. Die Breite Bn kann dann an jeder Stelle aus der Einhüllenden ermittelt werden. Auch in diesen Fällen kann ein Sicherheitsabstand berücksichtigt werden.

Es ist unmittelbar erkennbar, dass es für verschiedene Transporteinheiten TEn, z.B. verschiedene Typen oder Größen, verschiedene transportierte Objekte O, verschiedene Bewegungsgrößen einer Transporteinheit TEn usw., auch verschiedene Bewegungsstraßen BSn geben kann, was aber an der grundsätzlichen erfindungsgemäßen Vorgehensweise nichts ändert. Wenn sich entlang eines Abschnitts eines Bewegungspfades BPn mehrere Bewegungsstraßen BSn mit verschiedenen Breiten Bn ergeben, kann auch vorgesehen sein, dass in einem solchen Abschnitt generell die Bewegungsstraße BSn mit der größten Breite Bn verwendet wird. Will man also verschiedene Typen von Transporteinheiten TEn entlang eines gemeinsamen Bewegungspfades BPn bewegen, so kann man vorzugsweise nur eine Bewegungsstraße BSn erzeugen indem man bei der Erzeugung eine maximale Einhüllende aller Typen betrachtet. Alternativ kann für jedes Paar aus Transporteinheit TEn und Bewegungspfad BPn eine eigene Bewegungsstraße BSn ermittelt oder vorgegeben werden. Auch Mischformen sind natürlich möglich.

Es können alle Bewegungsstraßen BSn für alle Bewegungspfade BPn und alle Transporteinheiten TEn des Planarmotors 1, beispielsweise zur Umsetzung einer Transportaufgabe, vorab ermittelt werden. Das kann beispielsweise erfolgen, nachdem die Bewegungspfade BPn geplant wurden oder bevor der Planarmotor 1 erstmalig oder wieder in Betrieb genommen wird. Zusätzlich ist ein Umkonfigurieren eines Bewegungspfaden BPn und/oder einer Bewegungsstraße BSn zur Laufzeit denkbar, indem zum Beispiel eine Bewegungsstraße BSn während des Betriebs des Planarmotors neu erstellt, geändert oder gelöscht wird. Ein solches Umkonfigurieren wird vorzugsweise in der Restlaufzeit eines vorgegebenen Zeitschritts der Steuereinheit 10 oder auf einer eigenen Steuerungseinheit durchgeführt. Sobald die neue Konfiguration erstellt ist und vorzugsweise alle Transporteinheiten TEn sich auch bezüglich der neuen Konfiguration auf einer Bewegungsstraße BSn befinden, kann in der Steuereinheit 10 auf diese gewechselt werden. Da das Erstellen der neuen Konfiguration abgeschlossen ist, bevor in den neuen Betriebsmodus gewechselt wird, sind auch in diesem Fall alle Bewegungsstraßen BSn vorab bekannt. Eine zusätzliche Bewegungsstraße BSn kann aber auch nur einen temporären Charakter besitzen, sodass sie beispielsweise nur für eine einzelne Bewegung genutzt wird, um beispielsweise initial eine Transporteinheit TEn auf eine andere Bewegungsstraße BSn überzuführen.

Mit den bekannten Bewegungsstraßen BSn wird nun geprüft, ob
- sich Bewegungsstraßen BSn in der Bewegungsebene 3 überlappen, ob sich also zumindest eine erste Bewegungsstraße BS1 und eine zweite Bewegungsstraße BS2 schneiden, oder
- sich eine Bewegungsstraße BSn mit sich selbst überlappt, oder
- sich eine Bewegungsstraße BSn und ein in der Bewegungsebene 3 definiertes Hindernis H überlappen,
um mögliche Konfliktzonen KZ im Überlappungsbereich zu ermitteln. Es sind natürlich auch gleichzeitig auch unterschiedliche Überlappungen möglich. Ein Überlappungsbereich ist damit der Bereich, in der es zu zumindest einer der oben beschriebenen Überlappungen kommt. Das ist in Fig.6 schematisch dargestellt, wobei Konfliktzonen KZ in Überlappungsbereichen zwischen Bewegungsstraßen BSn oder im Bereich eines Hindernisses H schraffiert dargestellt sind. Es ist aber denkbar, dass sich mehr als zwei Bewegungsstraßen BSn in einem Überlappungsbereich überlappen.

Im Allgemeinen wird unter einer Konfliktzone KZ ein geometrischer Bereich in der Bewegungsebene 3 verstanden, in dem zumindest zwei, auf unterschiedlichen oder gleichen Bewegungspfaden BPn bewegte Transporteinheiten TEn kollidieren könnten oder in dem eine Transporteinheit TEn mit einem Hindernis kollidieren könnte.

Eine Bewegungsstraße BSn kann aber auch verwendet werden, um zu überprüfen, ob sich die Bewegungsstraße BSn vollständig in einem vorgegebenen zulässigen Bewegungsbereich der Bewegungsebene 3 befindet. Der zulässige Bewegungsbereich kann einerseits in natürlicher Weise durch die Ränder der Bewegungsebene 3 begrenzt sein. Andererseits können aber auch Hindernisse H innerhalb der Bewegungsebene 3 definiert sein, die von allen oder auch nur einzelnen Transporteinheiten TEn vermieden werden müssen. Diese Hindernisse H werden als logische Grenzen des Bewegungsbereichs gesehen. Ein Überlappungsbereich einer Bewegungsstraße BSn mit der Fläche außerhalb des zulässigen Bewegungsbereichs wird im Rahmen der Erfindung ebenfalls als Konfliktzone KZ betrachtet, die von Transporteinheiten TEn auf dem Bewegungspfad BPn vermieden werden müssen.

Wurde zumindest eine Konfliktzonen KZ gefunden, so kann diese Information weiterverarbeitet werden, indem sie entweder dem Anwender zur Verfügung gestellt wird, beispielsweise in einer graphischen oder textuellen Ausgabe eines Planungstools für den Planarmotor 1, das dazu verwendet werden kann den Transport- und Verarbeitungsprozess zu optimieren, oder die Information wird benützt um, vorzugsweise vollautomatisiert, den Prozessfluss der mit dem Planarmotor 1 durchgeführten Transportaufgabe zu verbessern, beispielsweise indem in die Steuerung der Bewegungen der Transporteinheiten TEn eingegriffen wird.

In einem Aspekt der Erfindung wird zur Kollisionsvermeidung daher als nächster Schritt nach der Ermittlung der zumindest einen Konfliktzone KZ zumindest eine, der an einer gefundenen Konfliktzone KZ beteiligten Bewegungsstraßen BSn umgeplant, um eine gefundene Konfliktzone KZ zu verkleinern, vorzugsweise gänzlich zu eliminieren, und/oder um die Anzahl der gefundenen Konfliktzonen zu verkleinern, vorzugsweise alle Konfliktzonen zu eliminieren. Zumindest eine Bewegungsstraße BSn kann auch umgeplant werden, sodass die Komplexität der Konfliktzonen KZn verringert wird, indem die Anzahl der an einer Konfliktzone KZ beteiligten Bewegungsstraßen BSn verringert wird. Auch eine Vergrößerung des Abstandes zwischen zwei Konfliktzonen KZn kann vorgesehen sein.

Eine Bewegungsstraße BSn kann beispielsweise umgeplant werden, indem ein Bewegungspfad BPn einer an der Konfliktzone KZ beteiligten Bewegungsstraßen BSn zumindest abschnittsweise, vorzugsweise im Bereich der Konfliktzone KZ, in der Bewegungsebene 3 umgeplant wird (also die Geometrie des Bewegungspfades BPn verändert wird) und/oder eine Breite Bn einer Bewegungsstraße BSn zumindest abschnittsweise, vorzugsweise im Bereich einer Konfliktzone KZ, geändert wird. Eine Breite Bn einer Bewegungsstraße BSn kann beispielsweise geändert werden, indem ein Sicherheitsabstand verkleinert oder vergrößert wird oder indem ein Objekt O anders auf der Transporteinheit TEn angeordnet wird oder eine Einschränkung hinsichtlich der möglichen entlang eines Bewegungspfades BPn transportierbaren Objekte O getroffen wird.

Diese Umplanung der zumindest einen an einer Konfliktzone KZ beteiligten Bewegungsstraße BSn erfolgt vorzugsweise vollautomatisiert anhand vorgegebener Regeln für die Umplanung mittels entsprechender Software, beispielsweise in einem Planungstool für den Planarmotor 1 oder auch in der Steuereinheit 10. Es können somit für die Umplanung Regeln vorgegeben sein, anhand denen ein Bewegungspfad BPn geändert wird, beispielsweise Regeln wie ein Bewegungspfad BPn in der Bewegungsebene 3 abschnittsweise verschoben werden soll und mit welcher Geometrie des Bewegungspfades BPn das durchgeführt werden soll oder wie eine Geometrie des Bewegungspfades BPn zu ändern ist.

Es ist aber auch denkbar, die Umplanung der zumindest einen an einer Konfliktzone KZ beteiligten Bewegungsstraße BSn mittels einer Optimierung durchzuführen. Für die Optimierung kann ein Gütefunktional definiert werden, das eine Funktion der Geometrie der an einer Konfliktzone beteiligten Bewegungspfade BPn oder Bewegungsstraßen BSn und/oder einer Konfliktzone KZ ist. Im Gütefunktional kann beispielsweise ein Güteterm enthalten sein, der die Ausdehnung einer Konfliktzone KZ, beispielsweise eine Fläche einer Konfliktzone KZ oder eine maximale Länge und Breite (bezogen auf den Bewegungspfad) der Konfliktzone KZ bewertet. Im Gütefunktional kann auch Güteterm enthalten sein, der die Länge der an einer Konfliktzone beteiligten Bewegungspfade BPn oder Bewegungsstraßen BSn in Bewegungsrichtung bewertet. Ein Güteterm kann auch die Anzahl der Konfliktzonen KZ bewerten. Solche Güteterme werden im Gütefunktional in vorgebbarer Weise gewichtet (z.B. mit einem Wert zwischen 0 und 1) und addiert. Das Gütefunktional wird dann optimiert, üblicherweise minimiert oder maximiert, indem die Geometrie der an einer Konfliktzone KZ beteiligten Bewegungspfade BPn oder Bewegungsstraßen BSn variiert wird. Die Bewegungspfade BPn oder Bewegungsstraßen BSn, die das Gütefunktional optimieren werden dann für die Umplanung verwendet.

Nach der Umplanung der zumindest einen Bewegungsstraße BSn kann dann der Planarmotor 1 mit den Transporteinheiten TEn, die in definierter Weise entlang der vorgesehenen Bewegungspfade BPn bewegt werden, in Betrieb genommen werden oder es kann auf die neu ermittelte Konfiguration umgeschaltet werden (wenn die Umplanung während des Betriebs erfolgt).

Analog zum automatisierten Umplanen kann eine Bewegungsstraße BSn auch manuell durch einen Anwender umgeplant werden. Dazu kann der Anwender das oben erwähnte Planungstool verwenden, um das Umplanen manuell durchzuführen und dabei ebenfalls einen verbesserten Prozessfluss zu erreichen. Dazu liefert das Planungstool Informationen über die Existenz von Konfliktzonen KZ (die wie oben beschrieben automatisch ermittelt werden) sowie vorzugsweise deren Position. Die Position kann beispielsweise mittels eines repräsentativen Punktes, wie dem Schnittpunkt der Bewegungspfade BPn oder dem Schwerpunkt der Konfliktzonenfläche, ausgegeben werden. Weiteren Nutzen bietet das Wissen über die Größe der Fläche der Konfliktzonen KZ, die an einer Konfliktzone beteiligten Bewegungspfade BPn oder Bewegungsstraßen BSn, deren Schnitt- bzw. Annäherungspunkte sowie die Projektionen dieser Punkte auf die beteiligten Bewegungspfade BPn.

Natürlich ist auch eine Kombination des manuellen Umplanens mit dem automatisierten Umplanen möglich, indem der Anwender zum Beispiel interaktiv je ermittelter Konfliktzone KZ entscheiden kann, ob für diese eine bessere Lösung der Umplanung als die automatisch ermittelte gesucht werden soll.

Kann eine Konfliktzone KZ gänzlich eliminiert werden, kann es an der Stelle, an der die Konfliktzone KZ war, zu keiner Kollision mehr zwischen Transporteinheiten TEn auf verschiedenen Bewegungspfaden BPn, die an der eliminierte Konfliktzone beteiligt waren, oder mit Hindernissen H in der Bewegungsebene 3 kommen, wodurch die Kollisionsüberwachung in der Steuereinheit 10 vereinfacht werden kann. Im Wesentlichen kann es in diesem Fall ausreichen, eine Kollision zwischen direkt benachbarten Transporteinheiten TEn entlang deren Bewegungspfade BPn in ihrer Bewegungsrichtung entlang des jeweiligen Bewegungspfades BPn zu prüfen. Das kann einfach in einer eindimensionalen Betrachtung erfolgen, ohne dazu eine zweidimensionale (oder räumliche) Ausdehnung der Transporteinheiten TEn in der Bewegungsebene 3 berücksichtigen zu müssen. Eine solche eindimensionale Kollisionsüberwachung kann mit sehr geringem Rechenaufwand realisiert werden, weil eine Kollision nur in einer Richtung geprüft werden muss.

Eine zweidimensionale Kollisionsüberwachung, also im Wesentlichen die zweidimensionale Prüfung auf eine Kollision in alle Richtungen in der Bewegungsebene 3, ist demgegenüber erheblich aufwendiger und erfordert erheblich mehr Rechenleistung als eine eindimensionale Kollisionsüberwachung, insbesondere auch deshalb, weil für die Kollisionsüberwachung auch Transporteinheiten TEn auf unterschiedlichen Bewegungspfaden BPn auf Kollision geprüft werden müssen.

In einem weiteren Aspekt der Erfindung kann somit die Verwendung von Bewegungsstraßen BSn, wie oben beschrieben, zur Ermittlung von Konfliktzonen KZ möglicher Kollisionen auch für eine vorteilhafte Ausgestaltung der Kollisionsüberwachung eines Planarmotors 1 verwendet werden. Aufgrund der Bewegungsstraßen BSn und ermittelter Konfliktzonen KZ kann es nur zwei Arten von Kollisionen geben. Einmal innerhalb einer Bewegungsstraße BSn aber außerhalb einer Konfliktzone KZ nur zwischen in der Bewegungsstraße BSn hintereinander fahrenden Transporteinheiten TEn. In einer Konfliktzone KZ sind hingegen Kollisionen zwischen Transporteinheiten TEn, die auf unterschiedlichen Bewegungspfad BPn bewegt werden, aus und in verschiedenen Richtungen denkbar oder Kollisionen einer Transporteinheit TEn mit einem Hindernis H.

Erfindungsgemäß ist die Kollisionsüberwachung des Planarmotors 1 derart ausgeführt, dass auf einem Bewegungspfad BPn aber außerhalb einer Konfliktzone KZ lediglich eine eindimensionale Kollisionsüberwachung in Bewegungsrichtung zwischen hintereinanderfahrenden Transporteinheiten TEn auf dem Bewegungspfad BPn implementiert ist. Durch die vorhergehende Prüfung auf Konfliktzonen KZ zwischen Bewegungsstraßen BSn oder zwischen einer Bewegungsstraße BSn und einem Hindernis H kann folglich außerhalb einer Konfliktzone KZ ausgeschlossen werden, dass andere als hintereinanderfahrende Transporteinheiten TEn kollidieren könnten. In einer Konfliktzone KZ ist eine zweidimensionale Kollisionsüberwachung implementiert, die für eine in einer an der Konfliktzone KZ beteiligten Bewegungsstraße BSn und in der Konfliktzone KZ bewegte Transporteinheit TEn prüft, ob die Gefahr einer Kollision mit einer anderen, in einer an der Konfliktzone KZ beteiligten Bewegungsstraße BSn bewegten Transporteinheit TEn oder mit einem Hindernis H besteht. Damit ist aber auch innerhalb der Konfliktzone KZ die Kollisionsüberwachung gegenüber klassischen Ansätzen vereinfacht, indem die Menge der zu überprüfenden Transporteinheiten TEn auf jene beschränkt werden kann, die sich auf den, an der Konfliktzone KZ beteiligten, Bewegungsstraßen BSn in einer lokalen Umgebung der Konfliktzone KZ befinden.

Daraus ist auch ersichtlich, dass sich auch eine Verkleinerung einer Konfliktzone KZ oder eine Vergrößerung des Abstandes zwischen zwei Konfliktzonen KZ positiv für die Kollisionsüberwachung auswirken, weil das die Bereiche, in denen eine zweidimensionale Kollisionsüberwachung erforderlich ist, oder die Menge der zu überprüfenden Transporteinheiten TEn einschränkt.

Damit kann ein vorteilhaftes Verfahren zum Betreiben eines Planarmotors mit einer Bewegungsebene, in der zumindest zwei Bewegungspfade vorgegeben werden, entlang denen sich eine Mehrzahl von Transporteinheiten bewegen, implementiert werden. Bei diesem Verfahren wird jeder Bewegungspfad in der Bewegungsebene zumindest abschnittsweise zweidimensional um den Bewegungspfad zu einer Bewegungsstraße in der Bewegungsebene ausgedehnt, indem zumindest abschnittsweise an jeder Stelle der Bewegungspfade eine Breite der Bewegungsstraße vorgegeben wird. Mit den sich ergebenden Bewegungsstraßen wird geprüft, ob sich die beiden ergebenden Bewegungsstraßen überlappen oder ob sich eine der sich ergebenden Bewegungsstraßen mit sich selbst überlappt oder ob sich eine der sich ergebenden Bewegungsstraßen mit einem hinsichtlich der Lage und Größe definierten Hindernis in der Bewegungsebene überlappt, um eine Konfliktzone im Überlappungsbereich zu ermitteln. In der Konfliktzone besteht Gefahr einer Kollision zwischen Transporteinheiten, die im Bereich der Konfliktzone auf an der Konfliktzone beteiligten Bewegungsstraßen bewegt werden, oder Gefahr einer Kollision zwischen einer Transporteinheit, die auf einer an der Konfliktzone beteiligten Bewegungsstraße bewegt wird, und einem Hindernis in der Bewegungsebene. Auf einem Bewegungspfad außerhalb der ermittelten Konfliktzone wird im Betrieb des Planarmotors eine eindimensionale Kollisionsüberwachung verwendet, die in Bewegungsrichtung prüft, ob Gefahr einer Kollision zwischen zwei auf dem Bewegungspfad hintereinanderfahrenden Transporteinheiten besteht. In der ermittelten Konfliktzone wird eine zweidimensionale Kollisionsüberwachung verwendet, die in allen Richtungen in der Bewegungsebene 3 prüft, ob in der Konfliktzone für eine in einer an der Konfliktzone beteiligten Bewegungsstraße bewegte Transporteinheit die Gefahr einer Kollision mit einer in einer anderen an der Konfliktzone beteiligten Bewegungsstraße bewegten Transporteinheit oder mit einem Hindernis H in der Bewegungsebene 3 besteht.

Es kann in der Steuereinheit 10 auch eine Betretungslogik für eine Konfliktzone KZ implementiert sein. Damit kann gesteuert werden, welche Transporteinheit TEn eine Konfliktzone KZ zuerst oder überhaupt betreten darf, wenn eine oder mehrere Transporteinheiten TEn gleichzeitig in eine Konfliktzone KZ einfahren möchten. Diese Betretungslogik ist unabhängig von einer Kollisionsüberwachung. In einer vorzugsweisen Ausführung darf die Konfliktzone KZ von einer Transporteinheit TEn nur betreten werden, sofern sichergestellt werden kann, dass die Transporteinheit TEn die Konfliktzone KZ kollisionsfrei wieder verlassen kann, beispielsweise, dass sich keine andere Transporteinheit TEn in der Konfliktzone befindet und sich kein Rückstau bildet oder dadurch kein Deadlock entsteht.

Die Betretungslogik berücksichtigt vorzugsweise auch eine Priorisierung der Transporteinheiten TEn. Die Priorisierung der Transporteinheiten TEn kann beispielsweise in der Steuereinheit 10 konfiguriert sein. Es kann aber auch vorgesehen sein, dass die Priorität der Transporteinheiten TEn von der Priorität der an der Konfliktzone KZ beteiligten Bewegungspfade BPn abgeleitet wird, sodass einzelnen Bewegungspfaden BPn Vorrang gewährt werden kann. Hierzu kann die Priorität der Bewegungspfade BPn konfiguriert sein. Die Priorisierung der Transporteinheiten TEn kann aber auch auf anderen bekannten Prinzipien zur Optimierung des Prozessflusses beruhen. So kann beispielsweise ein Ticket System (etwa ein first-come-first-serve-Prinzip, eine zeitliche Ampelregelung, ein Durchsatzverhältnis zwischen Bewegungspfaden BPn), eine Optimierung hinsichtlich der Wartezeit der Transporteinheiten TEn oder ein System, welches jene Bewegungspfade BPn bevorzugt, an welchen mehr Transporteinheiten TEn warten, verwendet werden. Auch eine Kombination verschiedener erwähnter Priorisierungen ist möglich. Natürlich ist es auch denkbar, die erfindungsgemäße Ausführung der Kollisionsvermeidung mit bestehenden Ansätzen zu kombinieren. Dabei kann innerhalb der Bewegungsstraßen BSn und der Konfliktzonen KZ die oben beschriebene

Kollisionsüberwachung verwendet werden und in jenen Bereichen, in denen keine Bewegungsstraße BSn definiert ist, wird auf klassische bekannte Ansätze zurückgegriffen oder auf eine Kollisionsüberwachung verzichtet. Damit kann zum Beispiel die notwendige Flexibilität innerhalb einer entlang eines Bewegungspfades BPn angeordneten Bearbeitungsstation erhalten werden.

Für die Kollisionsvermeidung ist es vorteilhaft, wenn ein beliebiges Betreten einer Bewegungsstraße BSn durch eine Transporteinheit TEn im Allgemeinen verhindert wird. Dazu kann eine Bewegungsstraße BSn beispielsweise analog zu den Rändem der Transportsegmente 2 als logische Begrenzung des zulässigen Bewegungsbereichs gesehen werden kann. Ein Betreten einer Bewegungsstraße BSn durch eine Transporteinheit TEn kann an ausgewählten und vorgegebenen Positionen, vorzugsweise am Beginn des Bewegungspfads BPn oder an ausgewählten, vorgegebenen Transitionspunkten entlang des Bewegungspfades BPn, zugelassen werden. Vorzugsweise darf eine Bewegungsstraße BSn an der ausgewählten Position von einer Transporteinheit TEn nur betreten werden, wenn ein kollisionsfreies Betreten bezüglich aller der Bewegungsstraße BSn zugeordneten Transporteinheiten TEn möglich ist.

Wie oben erwähnt werden die Bewegungspfade BPn und die davon abhängigen Bewegungsstraßen BSn üblicherweise einmal vorab ermittelt, zumindest aber nur dann, wenn ein Bewegungspfad BPn (auch nur abschnittsweise) neu geplant wird und somit ein Umkonfigurieren nötig ist.

Nach einem Fehlerverhalten des Planarmotors 1, bei dem die Transporteinheiten TEn beispielsweise unkontrolliert austrudeln und damit nach dem Austrudeln eine unkontrollierte Endposition in der Bewegungsebene 3 einnehmen, oder beim Hochfahren des Planarmotors 1 nach einem Anlagenstillstand kann es vorkommen, dass eine Transporteinheit TEn neben, partiell auf einer Bewegungsstraße BSn oder auch vollständig oder partiell auf einer anderen Bewegungsstraße BSn als vorgesehen steht oder vollständig außerhalb sämtlicher Bewegungsstraßen steht. "Partiell" auf einer Bewegungsstraße BSn bedeutet dabei, dass eine Transporteinheit TEn nicht zur Gänze innerhalb der zugehörigen Bewegungsstraße BSn steht, sondern nur zum Teil.

Dabei kann es beispielsweise zu folgenden Situationen kommen. Die Transporteinheit TEn steht zwar nicht neben einer Bewegungsstraße BSn, steht aber auf oder partiell auf einer falschen Bewegungsstraße BSn. Die Transporteinheit TEn ist teilweise auf der Bewegungsstraße BSn und teilweise außerhalb der Bewegungsstraße BSn. Die Transporteinheit TEn ist teilweise auf mehreren Bewegungsstraßen BSn. Die Transporteinheit TEn ist gänzlich außerhalb der Bewegungsstraße BSn.

Vor einem ordnungsgemäßen Betrieb des Planarmotors 1 ist daher eine Wiederherstellung eines definierten Zustandes vorteilhaft, was beispielsweise von der Steuereinheit 10 ausgeführt werden kann. Für die oben beschriebene Kollisionsvermeidung wird davon ausgegangen, dass ein solcher definierter Zustand vorliegt. Im Folgenden wird erläutert, wie man einen solchen definierten Zustand erreichen kann.

Für den ordnungsgemäßen Betrieb des Planarmotors 1 ist es notwendig, dass keine Transporteinheit TEn partiell in eine Bewegungsstraße BSn hineinragt, welcher sie nicht zugeordnet ist. Ansonst kann das oben beschriebene Verfahren der eindimensionalen Kollisionsüberwachung auf Bewegungsstraße BSn außerhalb von Konfliktzonen KZ fehlschlagen. Ist eine eindimensionale Kollisionsüberwachung in einer nicht erfindungsgemäßen Ausführungsform nicht vorgesehen, dann wäre das nicht unbedingt erforderlich, aber trotzdem sinnvoll.

Zur Wiederherstellung eines definierten Zustandes des Planarmotors 1 sind die Transporteinheiten TEn, zumindest jene welche sich innerhalb oder partiell innerhalb einer Bewegungsstraße BSn befinden, zuerst einem Bewegungspfad BPn oder einer Bewegungsstraße BSn zuzuordnen. Hierbei kann die Zuordnung zum letzten bekannten Bewegungspfad BPn einer Transporteinheit TEn vorgenommen werden. Es kann aber auch eine Zuordnung bezüglich einem vordefinierten initialen Bewegungspfad BPn, welcher beispielsweise durch den Anwender vorgegeben wird, vorgenommen werden. Es kann aber auch eine Zuordnung zum örtlich nächstliegenden Bewegungspfad BPn vorgenommen werden.

Vorzugsweise befinden sich im ordnungsgemäßen Betrieb alle einer Bewegungsstraße BSn zugordneten Transporteinheiten TEn vollständig auf der Bewegungsstraße BSn, ragen also nicht aus der zugordneten Bewegungsstraße BSn hinaus. Für die Wiederherstellung des ordnungsgemäßen Betriebs sind jene Transporteinheiten TEn, welcher sich nicht vollständig auf der zugordneten Bewegungsstraße BSn befinden (also zumindest teilweise aus dieser herausragen), durch eine Wiederherstellungsbewegung auf die zugordnete Bewegungsstraße BSn überzuführen. Hierzu können temporäre Wiederherstellungspfade oder Wiederherstellungsstraßen definiert sein, entlang denen sich solche Transporteinheiten zur Überführung bewegen. Der Startpunkt eines solchen temporären Wiederherstellungspfades ist die aktuelle Position der Transporteinheit TEn und der Endpunkt ein Punkt in der Bewegungsstraße BSn, in die die Transporteinheit TEn überzuführen ist. "Temporär" deshalb, weil diese temporären Wiederherstellungspfade oder Wiederherstellungsstraßen nach der Herstellung des definierten Zustandes nicht mehr gebraucht werden. Dieser temporäre Zustand kann als eigener Modus des Wiederherstellens angesehen werden, folgt aber vorzugsweise auch dem hier beschriebenen Verfahren, indem die Wiederherstellungsstraßen gleich den Bewegungsstraßen BSn behandelt werden.

Der Prozess des Wiederherstellens kann durch manuelle Eingabe einer Abfolge von Bewegungskommandos erfolgen, wird aber vorzugsweise vollautomatisch von der Steuereinheit 10 durchgeführt, ohne dass der Anwender eingreifen muss.

Im Zuge einer solchen automatischen Wiederherstellung ist ein zumindest temporäres Hinzufügen von Wiederherstellungsspfaden oder Wiederherstellungsstraßen notwendig, sodass sich entsprechend Wiederherstellungskonfliktzonen ergeben können, die hinsichtlich der Steuerung der Bewegungen der Transporteinheiten TEn und einer Kollisionsüberwachung wie oben beschrieben behandelt werden können. Die Wiederherstellungsspfade können entweder so gewählt werden, dass sie an beliebigen oder vorgegebenen Stellen in die vorgesehenen Bewegungsstraßen BSn einmünden. Beim Erstellen der Wiederherstellungsspfade ist vorzugsweise darauf zu achten, dass Wiederherstellungskonfliktzonen nur an den Betretungspunkten der Bewegungsstraßen BSn aber nicht entlang der Wiederherstellungspfade entstehen. Ist der Wiederherstellungsvorgang abgeschlossen können die Wiederherstellungsstraßen wieder verworfen werden.

Um ein möglichst konfliktfreies Einfahren der Transporteinheiten TEn auf die zugeordneten Bewegungsstraßen BSn zu gewährleisten und dabei Deadlock-Situationen nach Möglichkeit zu vermeiden kann es weiters sinnvoll sein, den zugeordneten Bewegungspfad BPn in definierter Reihenfolge zu betreten, also die Reihenfolge festzulegen, in der die Transporteinheiten TEn ihre Position am Bewegungspfad BPn einnehmen. Das kann beispielsweise erfolgen, in dem jene Transporteinheiten TEn, deren Abstand hinsichtlich der orthogonalen Projektion auf den vorgesehenen Betretungspunkt des Bewegungspfades BPn oder der Bewegungsstraße BSn kleiner ist, zuerst wiederhergestellt werden und bei Bedarf mittels einer Bewegung entlang des Bewegungspfads BPn für nachfolgende Transporteinheiten TEn Platz schaffen. Der Abstand kann beispielsweise bezüglich eines Referenzpunkts RP oder auch bezüglich eines beliebigen anderen Punkts (z.B. Extremalpunkts) auf der Transporteinheit TEn ermittelt werden. Der Abstand kann allerdings auch mittels einer anderen Metrik als der orthogonalen Projektion bestimmt werden, beispielsweise der kürzesten Entfernung in eine bestimmte Richtung der Bewegungsebene 3, wie etwa der x-Richtung der Planarmotorausrichtung oder die Länge des jeweiligen Wiederherstellungspfades.

Wenn die Zuordnung und vorzugsweise auch Zuordnungsreihenfolge, gegebenenfalls auch die Reihung der Transporteinheiten TEn in Bewegungsrichtung auf dem Bewegungspfad BPn, festgelegt wurde, werden die Transporteinheiten TEn auf den zugeordneten Bewegungspfad BPn bewegt, also beispielsweise der jeweilige Referenzpunkt RP auf dem Bewegungspfad BPn positioniert, gegebenenfalls in der ermittelten Reihung. Falls gewünscht kann in diesem Schritt, durch eine Bewegung der bereits eingeordneten Transporteinheiten TEn, auch die Reihenfolge entlang des Bewegungspfads BPn angepasst werden.

Die Bewegung der Transporteinheiten TEn zum jeweiligen Bewegungspfad BPn hin erfolgt dann entlang der Wiederherstellungspfade, welche vorzugsweise analog zu der für die Zuordnungsreihenfolge verwendeten Metrik erstellt wurden. Hierbei ist natürlich darauf zu achten, dass es zu keinen Kollisionen zwischen Transporteinheiten TEn kommt.

Transporteinheiten TEn mit niedrigerer Zuordnungspriorität, die die Zuordnungsreihenfolge festlegt, haben vorzugsweise Nachrang gegenüber Transporteinheiten TEn höherer Zuordnungspriorität. Die Zuordnungspriorität kann für jede Transporteinheit TEn vorgegeben sein oder festgelegt werden. Dies ist dann vorteilhaft, wenn nicht alle einem Bewegungspfad BPn zugeordneten Transporteinheiten TEn kollisionsfrei auf der Bewegungsstraße BSn positioniert werden können. Vorzugsweise darf eine Bewegungsstraße BSn von einer Transporteinheit TEn nur betreten werden, wenn eine Bewegung zu dem jeweiligen Bewegungspfad BPn konfliktfrei erfolgen kann.

## Patentansprüche

1. Verfahren zum Betreiben eines Planarmotors (1) mit einer Bewegungsebene (3), in der eine Mehrzahl von Bewegungspfaden (BPn) vorgegeben wird, entlang denen sich eine Mehrzahl von Transporteinheiten (TEn) bewegen, wobei zumindest zwei Bewegungspfade (BPn) in der Bewegungsebene (3) zumindest abschnittsweise zweidimensional um den jeweiligen Bewegungspfad (3) zu einer Bewegungsstraße (BSn) in der Bewegungsebene (3) ausgedehnt wird, indem zumindest abschnittsweise an jeder Stelle des jeweiligen Bewegungspfades (BPn) eine Breite (Bn) der Bewegungsstraße (BSn) vorgegeben wird, und geprüft wird, ob sich die zumindest zwei ergebenden Bewegungsstraßen (BSn) überlappen oder ob sich eine der sich ergebenden Bewegungsstraßen (BSn) mit sich selbst überlappt oder ob sich eine der sich ergebenden Bewegungsstraßen (BSn) mit einem hinsichtlich der Lage und Geometrie definierten Hindernis (H) in der Bewegungsebene (3) überlappt, um eine Konfliktzone (KZ) in einem Überlappungsbereich zu ermitteln, in der Gefahr einer Kollision zwischen Transporteinheiten (TEn), die im Bereich der Konfliktzone (KZ) auf an der Konfliktzone (KZ) beteiligten Bewegungsstraßen (BSn) bewegt werden, besteht oder Gefahr einer Kollision zwischen einer Transporteinheit (TEn), die auf einer an der Konfliktzone (KZ) beteiligten Bewegungsstraße (BSn) bewegt wird, und dem Hindernis (H) in der Bewegungsebene (3) besteht, und die ermittelte Konfliktzone (KZ) bei der Steuerung der Bewegung der Transporteinheiten (TEn) entlang des zugeordneten Bewegungspfades (BPn) berücksichtigt wird, um Kollisionen zwischen Transporteinheiten (TEn), die auf an der Konfliktzone (KZ) beteiligten Bewegungsstraßen (BSn) bewegt werden, oder zwischen einer Transporteinheit (TEn) und dem Hindernis (H) in der Bewegungsebene (3) zu vermeiden, wobei
die ermittelte Konfliktzone (KZ) bei der Steuerung der Bewegung der Transporteinheiten (TEn) entlang des zugeordneten Bewegungspfades (BPn) berücksichtigt wird, indem zur Kollisionsvermeidung in einer Konfliktzone (KZ) eine zweidimensionale Kollisionsüberwachung verwendet wird, die prüft, ob in der Konfliktzone (KZ) in der Bewegungsebene (3) für eine in einer an der Konfliktzone (KZ) beteiligten Bewegungsstraße (BSn) bewegte Transporteinheit (TEn) die Gefahr einer Kollision mit einer in einer anderen an der Konfliktzone (KZ) beteiligten Bewegungsstraße (BSn) bewegten Transporteinheit (TEn) oder mit einem Hindernis (H) in der Bewegungsebene (3) besteht, **dadurch gekennzeichnet, dass**
auf einem Bewegungspfad (BPn) außerhalb einer Konfliktzone (KZ) eine eindimensionale Kollisionsüberwachung verwendet wird, die in Bewegungsrichtung prüft, ob Gefahr einer Kollision zwischen zwei auf dem Bewegungspfad (BPn) hintereinanderfahrenden Transporteinheiten (TEn) besteht.

2. Verfahren nach Anspruch 1, **dadurch gekennzeichnet, dass** die Breite (Bn) zumindest einer Bewegungsstraße (BSn) in der Bewegungsebene (3) orthogonal auf den zugeordneten Bewegungspfad (BPn) vorgegeben wird.

3. Verfahren nach Anspruch 1 oder 2, **dadurch gekennzeichnet, dass** die Breite (Bn) zumindest einer Bewegungsstraße (BSn) in der Bewegungsebene (3) zumindest abschnittsweise asymmetrisch zum Bewegungspfad (BPn) vorgegeben wird.

4. Verfahren nach einem der Ansprüche 1 bis 3, **dadurch gekennzeichnet, dass** an einer Transporteinheit (TEn) ein Referenzpunkt (RP) bestimmt wird und der Bewegungspfad (BPn) auf den Referenzpunkt (RP) bezogen wird.

5. Verfahren nach Anspruch 4, **dadurch gekennzeichnet, dass** an einer Position des Bewegungspfades (BPn) in Bewegungsrichtung der Transporteinheit (TEn) gesehen an beiden Seiten der Transporteinheit (TEn) Vektoren (VL, VR) vom Referenzpunkt (RP) zu einer Außenkontur der Transporteinheit (TEn) in der Bewegungsebene (3) ermittelt werden, dass die ermittelten Vektoren (VL, VR) jeweils auf eine Normale (N) auf den Bewegungspfad (3) an dieser Position projiziert werden und dass die jeweils längsten Projektionen (PR, PL) auf jeder Seite zur Breite (Bn) der Bewegungsstraße (BSn) an dieser Stelle addiert werden.

6. Verfahren nach Anspruch 5, **dadurch gekennzeichnet, dass** als Außenkontur eine vorgegebene geometrische Figur verwendet wird, die die Transporteinheit (TEn) in der Bewegungsebene (3) umgibt.

7. Verfahren nach einem der Ansprüche 1 bis 6, **dadurch gekennzeichnet, dass** die ermittelte Konfliktzone (KZ) bei der Steuerung der Bewegung der Transporteinheiten (TEn) entlang des zugeordneten Bewegungspfades (BPn) berücksichtigt wird, indem zur Kollisionsvermeidung zumindest eine der an der Konfliktzone (KZ) beteiligten Bewegungsstraßen (BSn) zumindest abschnittsweise umgeplant wird, um die Konfliktzone (KZ) zu eliminieren und/oder um die Größe der ermittelten Konfliktzone (KZ) zu verkleinern und/oder um eine Anzahl der ermittelten Konfliktzonen (KZ) zu verringern und/oder um die Anzahl der an der Konfliktzone (KZ) beteiligten Bewegungsstraßen (BSn) zu verringern und/oder um einen Abstand zwischen zwei Konfliktzonen (KZ) zu vergrößern.

8. Verfahren nach Anspruch 7, **dadurch gekennzeichnet, dass** eine Bewegungsstraße (BSn) umgeplant wird, indem der der Bewegungsstraße (BSn) zugeordnete Bewegungspfad (BPn) zumindest abschnittsweise umgeplant wird und/oder zumindest abschnittsweise eine Breite (Bn) einer Bewegungsstraße (BSn) geändert wird.

9. Verfahren nach einem der Ansprüche 1 bis 8, **dadurch gekennzeichnet, dass** die ermittelte Konfliktzone (KZ) bei der Steuerung der Bewegung der Transporteinheiten (TEn) entlang des zugeordneten Bewegungspfades (BPn) berücksichtigt wird, indem vor dem Betreten einer Konfliktzone (KZ) durch eine in einer an der Konfliktzone (KZ) beteiligten Bewegungsstraße (BSn) bewegten Transporteinheit (TEn) überprüft wird, ob diese Transporteinheit (TEn) mit der vorgesehenen Bewegung die Konfliktzone (KZ) ohne Kollision mit einer anderen auf einer anderen an der Konfliktzone (KZ) beteiligten Bewegungsstraße (BSn) bewegte Transporteinheit (TEn) wieder verlassen kann und im negativen Fall das Betreten verweigert wird.

10. Verfahren nach einem der Ansprüche 1 bis 9, **dadurch gekennzeichnet, dass** die ermittelte Konfliktzone (KZ) bei der Steuerung der Bewegung der Transporteinheiten (TEn) entlang des zugeordneten Bewegungspfades (BPn) berücksichtigt wird, indem Transporteinheiten (TEn) eine Priorität zugewiesen wird und einer Transporteinheit (TEn) mit höchster Priorität der Zutritt zu einer Konfliktzone (KZ) zuerst gestattet wird.

## Claims

1. Method for operating a planar motor (1) having a movement plane (3) in which a plurality of movement paths (BPn) are prespecified along which a plurality of transport units (TEn) move, wherein at least two movement paths (BPn) in the movement plane (3) are expanded two-dimensionally around the respective movement path (BPn), at least in sections, to form a movement route (BSn) in the movement plane (3) by prespecifying at least in sections of the movement route (BSn) sections a width (Bn) at each point of the movement path (BPn), and wherein it is checked whether the at least two resulting movement routes (BSn) overlap, or one of the resulting movement routes (BSn) overlaps with itself, or whether one of the resulting movement routes (BSn) overlaps with an obstacle (H) in the movement plane (3), which obstacle is defined with respect to its location and geometry, in order to determine a conflict zone (KZ) in an overlap region in which there is a risk of collision between transport units (TEn) moving in the region of the conflict zone (KZ) on movement routes (BSn) involved in the conflict zone (KZ) or a risk of collision between a transport unit (TEn) moving on a movement route (BSn) involved in the conflict zone (KZ) and the obstacle (H) in the movement plane (3), and wherein the determined conflict zone (KZ) is taken into account when controlling the movement of the transport units (TEn) along the assigned movement path (BPn) in order to avoid collisions between transport units (TEn) moving on movement routes (BSn) involved in the conflict zone (KZ) or between a transport unit (TEn) and the obstacle (H) in the movement path (BPn), wherein the determined conflict zone (KZ) is taken into account when controlling the movement of the transport units (TEn) along the assigned movement path (BPn) by using two-dimensional collision monitoring for collision avoidance in a conflict zone (KZ), which two-dimensional collision monitoring checks whether there is a risk in the conflict zone (KZ) in the movement plane (3) that a transport unit (TEn) moving in a movement route (BSn) involved in the conflict zone (KZ) will collide with a transport unit (TEn) moving in another movement route (BSn) involved in the conflict zone (KZ) or with an obstacle (H) in the movement plane (3), **characterized in that** on a movement path (BPn) outside of a conflict zone (KZ) a one-dimensional collision monitoring is used, which one-dimensional collision monitoring checks in the movement direction whether there is a risk of a collision between two transport units (TEn) traveling behind one another on the movement path (BPn).

2. Method according to claim 1, **characterized in that** the width (Bn) of at least one movement route (BSn) in the movement plane (3) is prespecified orthogonally to the assigned movement path (BPn).

3. Method according to claim 1 or 2, **characterized in that** the width (Bn) of at least one movement route (BSn) in the movement plane (3) is prespecified asymmetrically to the movement path (BPn), at least in sections.

4. Method according to one of claims 1 to 3, **characterized in that** a reference point (RP) is determined on a transport unit (TEn), and the movement path (BPn) is related to the reference point (RP).

5. Method according to claim 4, **characterized in that** vectors (VL, VR) from the reference point (RP) to the outer contour of the transport unit (TEn) in the movement plane (3) are determined at a position of the movement path (BPn) on both sides of the transport unit (TEn) as viewed in the direction of movement of the transport unit (TEn), **in that** the determined vectors (VL, VR) are in each case projected onto a normal (N) on the movement path (BPn) at this position, and **in that** the longest projection (PR, PL) on each side are added to the width (Bn) of the movement route (BSn) at this position.

6. Method according to claim 5, **characterized in that** a prespecified geometric figure, which surrounds the transport unit (TEn) in the movement plane (3), is used as the outer contour.

7. Method according to one of claims 1 to 6, **characterized in that** the determined conflict zone (KZ) is taken into account when controlling the movement of the transport units (TEn) along the assigned movement path (BPn) **in that**, for collision avoidance, at least one of the movement routes (BSn) involved in the conflict zone (KZ) is replanned, at least in sections, in order to eliminate the conflict zone (KZ) and/or to reduce the size of the determined conflict zone (KZ) and/or to reduce a number of determined conflict zones (KZ) and/or to reduce the number of movement routes (BSn) involved in the conflict zone (KZ) and/or to increase a distance between two conflict zones (KZ).

8. Method according to claim 7, **characterized in that** a movement route (BSn) is replanned **in that** the movement path (BPn) assigned to the movement route (BSn) is replanned, at least in sections, and/or a width (Bn) of a movement route (BSn) is changed, at least in sections.

9. Method according to one of claims 1 to 8, **characterized in that** the determined conflict zone (KZ) is taken into account when controlling the movement of the transport units (TEn) along the assigned movement path (BPn) by checking, before a transport unit (TEn) moving on a movement route (BSn) involved in a conflict zone (KZ) enters the conflict zone (KZ), whether said transport unit (TEn) can exit the conflict zone (KZ) with the intended movement again without colliding with another transport unit (TEn) moving on a different movement route (BSn) involved in the conflict zone (KZ), and, in the negative case, entry is denied.

10. Method according to one of claims 1 to 9, **characterized in that** the determined conflict zone (KZ) is taken into account when controlling the movement of the transport units (TEn) along the assigned movement path (BPn) **in that** transport units (TEn) are assigned a priority, and a transport unit (TEn) having the highest priority is granted entry into a conflict zone (KZ) first.

## Revendications

1. Procédé pour faire fonctionner un moteur planaire (1) comprenant un plan de mouvement (3), dans lequel sont prédéfinis une pluralité de trajets de mouvement (BPn) le long desquels sont mises en mouvement une pluralité d'unités de transport (TEn), au moins deux trajets de mouvement (BPn) dans le plan de mouvement (3) étant étendus au moins par portions de manière bidimensionnelle autour du trajet de mouvement (3) respectif afin de former une voie de mouvement (BSn) dans le plan de mouvement (3), en prédéfinissant au moins par portions, à chaque emplacement du trajet de mouvement (Bpn) respectif, une largeur (Bn) de la voie de mouvement (BSn), et en vérifiant si les au moins deux voies de mouvement (BSn) résultantes se chevauchent ou si l'une des voies de mouvement (BSn) résultantes se chevauche elle-même ou si l'une des voies de mouvement (BSn) résultantes chevauche un obstacle (H) défini en termes de position et de géométrie dans le plan de mouvement (3), afin de déterminer une zone de conflit (KZ) dans une zone de chevauchement dans laquelle il existe un risque de collision entre des unités de transport (TEn) qui sont en mouvement dans la zone de conflit (KZ) sur des voies de mouvement (BSn) impliquées dans la zone de conflit (KZ) ou s'il existe un risque de collision entre une unité de transport (TEn) qui est en mouvement sur une voie de mouvement (BSn) impliquée dans la zone de conflit (KZ) et l'obstacle (H) dans le plan de mouvement (3), et la zone de conflit (KZ) déterminée est prise en compte lors de la commande du mouvement des unités de transport (TEn) le long du trajet de mouvement (BPn) associé, afin d'éviter les collisions entre les unités de transport (TEn) qui sont en mouvement sur les voies de mouvement (BSn) impliquées dans la zone de conflit (KZ) ou entre une unité de transport (TEn) et l'obstacle (H) dans le plan de mouvement (3), la zone de conflit (KZ) déterminée étant prise en compte lors de la commande du mouvement des unités de transport (TEn) le long du trajet de mouvement (BPn) associé en utilisant, pour éviter les collisions dans une zone de conflit (KZ), une surveillance de collision bidimensionnelle qui vérifie s'il existe, dans la zone de conflit (KZ) dans le plan de mouvement(3), pour une unité de transport (TEn) qui est en mouvement dans une voie de mouvement (BSn) impliquée dans la zone de conflit (KZ), le risque d'une collision avec une unité de transport (TEn) en mouvement dans une autre voie de mouvement (BSn) impliquée dans la zone de conflit (KZ) ou avec un obstacle (H) dans le plan de mouvement (3), **caractérisé en ce que**, sur un trajet de mouvement (BPn) en dehors d'une zone de conflit (KZ), on utilise une surveillance de collision unidimensionnelle qui vérifie, dans la direction du mouvement, s'il existe un risque de collision entre deux unités de transport (TEn) se déplaçant l'une derrière l'autre sur le trajet de mouvement (BPn).

2. Procédé selon la revendication 1, **caractérisé en ce que** la largeur (Bn) d'au moins une voie de mouvement (BSn) dans le plan de mouvement (3) est prédéfinie orthogonale sur le trajet de mouvement (BPn) associé.

3. Procédé selon la revendication 1 ou 2, **caractérisé en ce que** la largeur (Bn) d'au moins une voie de mouvement (BSn) dans le plan de mouvement (3) est spécifiée au moins par portions asymétrique par rapport au trajet de mouvement (BPn).

4. Procédé selon l'une des revendications 1 à 3, **caractérisé en ce qu'**un point de référence (RP) est déterminé sur une unité de transport (TEn) et le trajet de mouvement (BPn) est référencé au point de référence (RP).

5. Procédé selon la revendication 4, **caractérisé en ce que**, vus à une position du trajet de mouvement (BPn) dans la direction de mouvement de l'unité de transport (TEn), des deux côtés de l'unité de transport (TEn), des vecteurs (VL, VR) sont déterminés du point de référence (RP) vers un contour extérieur de l'unité de transport (TEn) dans le plan de mouvement (3), **en ce que** les vecteurs (VL, VR) déterminés sont respectivement projetés à cette position sur une normale (N) sur le trajet de mouvement (3) et **en ce que** les projections (PR, PL) respectivement les plus longues de chaque côté sont ajoutées à la largeur (Bn) de la voie de mouvement (BSn) à cet endroit.

6. Procédé selon la revendication 5, **caractérisé en ce que** le contour extérieur utilisé est une figure géométrique prédéfinie qui entoure l'unité de transport (TEn) dans le plan de mouvement (3).

7. Procédé selon l'une des revendications 1 à 6, **caractérisé en ce que** la zone de conflit (KZ) déterminée est prise en compte lors de la commande du mouvement des unités de transport (TEn) le long du trajet de mouvement (BPn) associé, en replanifiant au moins par portions, en vue d'éviter les collisions, au moins l'une des voies de mouvement (BSn) impliquées dans la zone de conflit (KZ), afin d'éliminer la zone de conflit (KZ) et/ou afin de réduire la taille de la zone de conflit (KZ) déterminée et/ou afin de réduire un nombre de zones de conflit (KZ) déterminées et/ou afin de réduire le nombre de voies de mouvement (BSn) impliquées dans la zone de conflit (KZ) et/ou afin d'augmenter une distance entre deux zones de conflit (KZ).

8. Procédé selon la revendication 7, **caractérisé en ce qu'**une voie de mouvement (BSn) est replanifiée en replanifiant au moins par portions le trajet de mouvement (BPn) associé à la voie de mouvement (BSn) et/ou en modifiant au moins par portions une largeur (Bn) d'une voie de mouvement (BSn).

9. Procédé selon l'une des revendications 1 à 8, **caractérisée en ce que** la zone de conflit (KZ) déterminée est prise en compte lors de la commande du mouvement des unités de transport (TEn) le long du trajet de déplacement (BPn) associé, en vérifiant, avant qu'une unité de transport (TEn) qui est en mouvement dans une voie de mouvement (BSn) impliquée dans une zone de conflit (KZ) n'entre dans la zone de conflit (KZ), si cette unité de transport (TEn) peut de nouveau quitter la zone de conflit (KZ) avec le mouvement prévu sans collision avec une autre unité de transport (TEn) en mouvement sur une autre voie de mouvement (BSn) impliquée dans la zone de conflit (KZ) et, dans le cas négatif, l'entrée est refusée.

10. Procédé selon l'une des revendications 1 à 9, **caractérisée en ce que** la zone de conflit (KZ) déterminée est prise en compte lors de la commande du mouvement des unités de transport (TEn) le long du trajet de mouvement (BPn) associé, en attribuant une priorité aux unités de transport (TEn) et en autorisant en premier lieu l'accès à une zone de conflit (KZ) à une unité de transport (TEn) ayant la priorité la plus élevée.
